# EUROPEAN PATENT SPECIFICATION

(11) **EP 3 328 589 B1**
(45) Date of publication and mention of the grant of the patent: **29.05.2019**
(21) Application number: 15788225.9
(22) Date of filing: 31.07.2015
(51) Int. Cl.: B25B 23/14, B25B 23/142, G01M 13/00, G01M 13/028

(54) **A DEVICE AND METHOD FOR MONITORING A TOOL**
VORRICHTUNG UND VERFAHREN ZUR ÜBERWACHUNG EINES WERKZEUGS
DISPOSITIF ET PROCÉDÉ DE SURVEILLANCE D'UN OUTIL

(43) Date of publication of application: 06.06.2018
(73) Proprietor: Stanley Black & Decker MEA FZE, Dubai (AE)
(72) Inventor: CIGADA, Alfredo, 20156 Milano (IT); SAUNIER, Laurent, 78470 Saint Remy les Chevreuse (FR); ZAMBON, Marco, 21023 BESOZZO (VA) (IT)
(74) Representative: SBD IPAdmin
(86) International application number: PCT/IT2015/000192
(87) International publication number: WO 2017/021984

(56) References cited:
- WO-A1-2006/105767
- WO-A1-2008/148075
- JP-A- 2009 291 888
- US-A1- 2005 160 885
- US-A1- 2005 223 817
- Jessica Lin: "A Symbolic Representation of Time Series, with Implications for Streaming Algorithms", , 13 June 2003 (2003-06-13), XP055028285, Retrieved from the Internet: URL:http://www.abdn.ac.uk/~csc242/teaching /CS4031/information/SAX.pdf [retrieved on 2012-05-29]

## Description

The present invention relates to device and a method for determining and counting operations of a tool equipped with a mechanism that produces vibration upon operation to a predetermined value, particularly a tool such as mechanical torque wrench. The device and method do not require any specific mechanism within the tool, only that it may be a tool that produces vibration or phenomena associated with vibration whenever the tool may be operated.

US 2005/0223817 A1 discloses such tool and method. WO 2006/105767 A1 discloses a method and device for categorizing antifriction bearing damages.

Japanese patent application publication No. JP2005-231001 discloses a device and a method for determining and counting the number of fastener tightening operations to predetermined torque value using a torque wrench. The device comprises a body, an accelerometer, a microcontroller, a battery, a display, LED lamps and a buzzer all fixed inside the device body. The device body is attached to a torque wrench via an elongate attachment member. Vibration generated by a tightening operation is transmitted from the torque wrench to the device body, and from there to the sensor, by way of the elongate attachment member. The display indicates the number of tightening operations counted by the device.

The programme that analyses the detection signal and decides whether one screw fastening has been completed can, by analysing specific features possessed by the detection signal, distinguish it from a vibration based on a shock such as a mere impact. According to JP2005-231001, the waveform of the detection signal produced when a torque bar operates upon completion of one screw fastening has a pattern that swings abruptly in both positive and negative directions, and therefore shock caused by dropping can be distinguished by extracting characteristics such as the peak value and the timing of the zero crossings.

It is a challenge for a device to detect a genuine tool operation and distinguish it from other events, such as the tool being dropped, with an acceptable level of accuracy. According to a first aspect of the present invention, there is provided a device for determining and counting operations of a tool equipped with a mechanism that produces vibration upon operation to a predetermined value, wherein the device comprises: a sensor for detecting vibration and emitting a detection signal based upon the vibration; a mounting arrangement for releasably mounting the sensor to a tool in such manner that vibration from a mechanism of said tool is transmittable to the sensor; a microcontroller for receiving a detection signal from the sensor and determining and counting operations of said tool; and a power supply for supplying electrical power to device, wherein the microcontroller calculates a second order derivative of a filtered detection signal and determines operation to the predetermined value based on analysis of the second order derivative signal.

A second order derivative signal measures how the rate of change of an acceleration signal is itself changing. Thus, conversion of the acceleration signal into its second order derivative signal helps to detect how "peaky" a peak in the acceleration signal is, independent from the acceleration signal amplitude. This increases the sensitivity of the application programme which, advantageously, helps to detect a genuine tool operation.

Preferably, the microcontroller analyses the second order derivative signal by seeking a peak value of the second order derivative signal over a threshold to determine operation to the predetermined value.

Preferably, the microcontroller analyses the second order derivative signal by evaluating event duration to determine operation to the predetermined value.

Preferably, the threshold is based on a multiple of a standard deviation of the detection signal over a noise floor of the second order derivative signal.

Alternatively, the microcontroller analyses the second order derivative signal by seeking a specific shape of the second order derivative signal to determine operation to the predetermined value. The waveform of a detection signal produced by a tool operation may differ from other events. Increased sensitivity may improve wave shape recognition and enhance determination of genuine tool operation in contrast to other events.

Preferably, the microcontroller smoothes the second order derivative signal. Application of a second order derivative to an acceleration signal tends to increase its higher frequency noise and this may be diminished by smoothing.

Preferably, the microcontroller defines a length of segment of the second order derivative signal to be analysed.

Preferably, the microcontroller defines bands according to a noise floor of the second order derivative signal and wherein the microcontroller uses dimensionality reduction methods to transform the second order derivative signal to a digital and/or a symbolic representation based on the bands. This significantly reduces the amount of data to be stored in the memory of the microcontroller with respect to the original time history.

Preferably, the dimensionality reduction methods comprise piecewise aggregate approximation and/or symbolic aggregate approximation methods. These are reliable methods.

Preferably, the microcontroller eliminates false detections of operation to the predetermined value based on analysis of the second order derivative signal. This may be achieved by checking that at least a certain percentage of the second order derivative signal's waveform corresponds to a certain profile indicative of a genuine tool operation. Alternatively, it may be achieved by dividing the number of event detections by two if each tool operation has two associated peaks. Dividing by two may help to delete peaks which are not associated to a genuine tool operation and which produce an odd count of events. The odd event is discounted.

Preferably, the microcontroller filters vibration having a frequency above 20Hz from the detection signal prior to calculation of the second order derivative signal. This may eliminate random noise (i.e. 20Hz and above) and preserves the lower frequencies, which are more deterministic and related to genuine tool operations.

Preferably, the microcontroller separates positive and negative components of the detection signal prior to calculation of the second order derivative signal and wherein the microcontroller combines the positive and negative components of the detection signal after calculation of the second order derivative signal to obtain a new signal. The amplitude of the positive and/or negative components of the acceleration signal in a forward direction operation of a tool may be markedly different to the reverse direction operation of a tool. The positive and negative components of the acceleration signal may be divided and processed separately by the algorithm to manage this inequality.

Preferably, the positive and negative components of the new signal comprise differing ratios of the new signal. These differing ratios help to manage inequality in amplitude of the positive and/or negative components of the acceleration signal between forward and reverse direction operations.

Preferably, the sensor is an accelerometer. An accelerometer may have three orthogonal sensor axes which aids sensitivity and helps versatility.

Preferably, the accelerometer is gravity sensitive. Thus, the accelerometer may be used as a clinometer. Changes in mean values detected by the accelerometer may help to understand when a tool is falling. This may help to delete spurious peaks out of the count of tool operations.

Preferably, the sensor and the microcontroller are in wired or wireless communication with each other and/or with an external computer and/or with the internet. These communication options may provide versatility in device design.

Preferably, the device comprises a body for housing the sensor and the microcontroller. Thus, the main components are assembled together. This may provide a compact device design.

Preferably, the device comprises an audible and/or a visible indicator coupled to the microcontroller for indication of operation of the tool to the predetermined value. This may reassure an operator of the tool that a genuine tool operation has been detected and counted. This may be useful in device testing and calibration.

Preferably, the device is for counting threaded fastening operations to a predetermined torque value by a torque wrench equipped with a torque transmission mechanism that produces a vibration upon threaded fastening to a predetermined torque value. Torque wrenches are used in industrial environments where safety and efficiency are important. Industrial companies make significant efforts to ensure that their operators are properly equipped. A device that assists in this objective may save time and effort.

In a second aspect of the present invention, there is provided a method for determining and counting operations of a tool equipped with a mechanism that produces vibration upon operation to a predetermined value, wherein the method comprises the steps of: providing a sensor for detecting vibration and emitting a detection signal based upon the vibration; mounting the sensor to a tool in such manner that vibration from a mechanism of said tool is transmittable to the sensor; providing a microcontroller for receiving a detection signal from the sensor; and executing a programme on the microcontroller to calculate a filtered second order derivative of the detection signal and to determine and count operation to the predetermined value based on analysis of the second order derivative signal. The second aspect of the present invention provides the advantages of the first aspect.

Preferably, the method comprises the step of providing the device of the first aspect of the invention.

The present invention will now be described in more detail with reference to the following drawings of which:
Figure 1 shows a cross-sectional view of a torque wrench;
Figure 2 shows an exploded perspective view of a torque wrench monitoring device;
Figure 3 shows top elevation view of the device of Figure 1;
Figure 4 shows a vertical cross-section A-A of the device of Figure 1;
Figure 5 shows a vertical staggered cross-section D-D of the device of Figure 1;
Figure 6 shows a vertical cross-section F-F of the device of Figure 1;
Figure 7 shows a block diagram of a microcontroller in the device of Figure 1; and
Figure 8 shows a short summary of a signal event recognition algorithm executed when the microcontroller executes an application programme;
Figure 9 shows a detailed summary of the signal event recognition algorithm of Figure 8;
Figures 10 to 28 show details of the signal event recognition algorithm of Figure 8; and
Figures 29 to 35 show details of various signal peak detection algorithms.

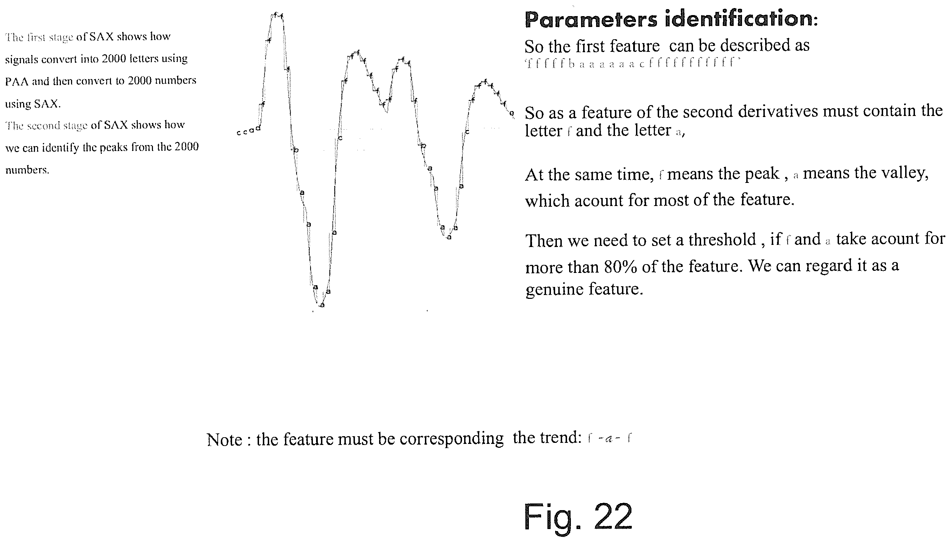

In Figure 22: The first stage of SAX shows how signals convert into 2000 letters using PAA and then convert to 2000 numbers using SAX. The second stage of SAX shows how we can identify the peaks from the 2000 numbers. Parameters identification: So the first feature can be described as 'f f f f f b a a a a a a c f f f f f f f f f f f '. So as a feature of the second derivatives must contain the letter f and the letter a. At the same time, f means the peak, a means the valley, which account for most of the feature. Then we need to set a threshold, if f and a take account for more than 80% of the feature. We can regard it as a genuine feature. Note: the feature must be corresponding the trend: f -a- f.

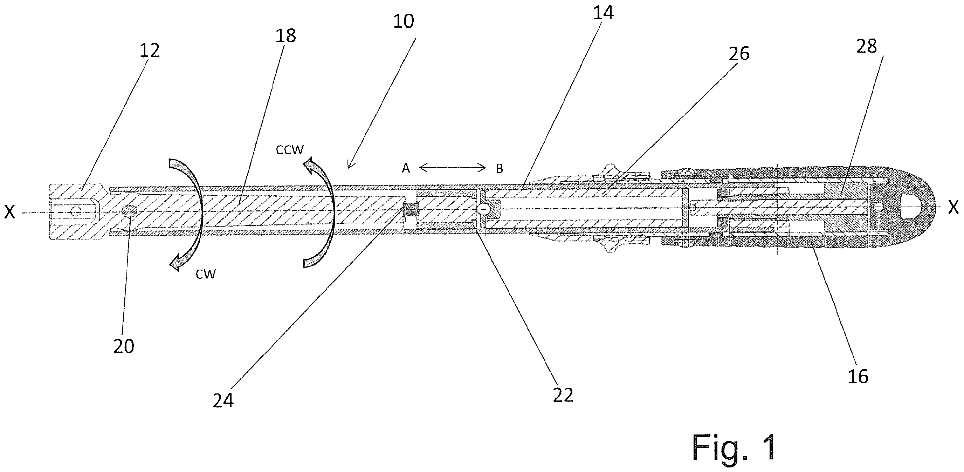

Referring to Figure 1, there is shown a torque wrench 10 comprising a wrench head 12 for connection to a nut, a bolt, a screw head, or similar fastener, which is to be turned by the torque wrench 10, an elongate hollow metal shaft 14 and a wrench handle 16 located at the opposite end of the shaft 14 to the head 12. The torque wrench 10 further comprises a torque bar 18 pivotally mounted on a head pin 20, a thrust bar 22, a bearing 24 between the torque bar 18 and the thrust bar 22, and a helical spring 26, all of which are disposed inside the shaft 14. The spring 26 biases the thrust bar 22 in a forward direction A towards the head 12. This spring's bias is variable by rotation of a wheel 28 which is coupled to the handle 16 which itself is rotatable. The torque bar 18, the thrust bar 22, the bearing 24 and the spring 26 constitute a torque transmission mechanism.

When tightening a fastener (i.e. rotating the torque wrench 10 in a clockwise direction CW as shown in Figure 1), and at the moment when a predetermined torque set by way of the spring 24 is reached, the thrust bar 22 is pushed by the bearing 24 in a rearward direction B towards the handle 16 and against the bias of the spring 26. The torque transmission mechanism is thus operated in the 'forward click' direction and the spring 26 is compressed. At the same time, the shaft 14 swings abruptly in the clockwise direction CW about an axis centred on the head pin 18. The torque bar 18 remains stationary. As a result, the torque bar 18 hits the inner wall of the shaft 14 and an impulse is generated by the torque wrench fastener tightening operation. This impulse produces both vibrations and a typical click noise which indicates that the fastener's predetermined torque has been reached.

After the predetermined torque has been reached, the operator refrains from tightening the fastener (i.e. allows the torque wrench 10 to rotate in a counter-clockwise direction CCW as shown in Figure 1). The 14 shaft swings in the counter-clockwise direction CCW about the axis centred on the head pin 18. The torque bar 18 remains stationary. As a result, the torque bar 18 leaves the inner wall of the shaft 14 and an impulse is generated when the thrust bar 22 pushes the bearing 24 in the forward direction A under the bias of the spring 26. This impulse produces both vibrations and another click noise which is different to the click noise produced by when the fastener's predetermined torque was reached. The torque transmission mechanism is thus operated in the 'reverse click' direction.

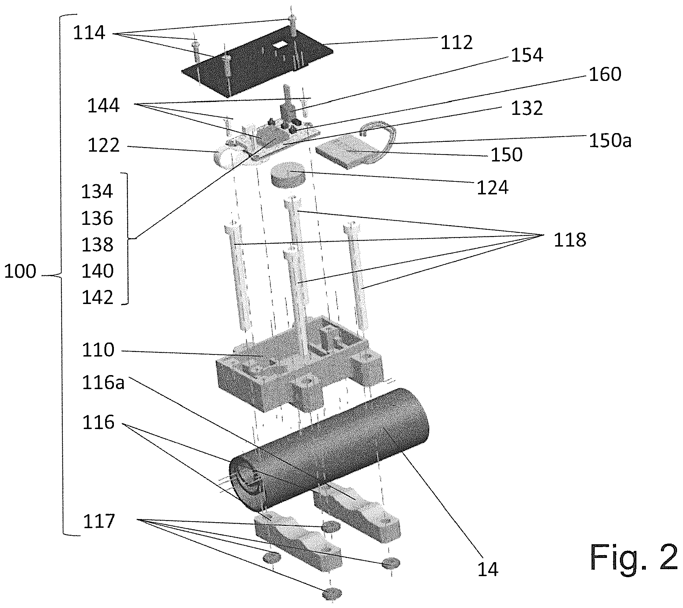

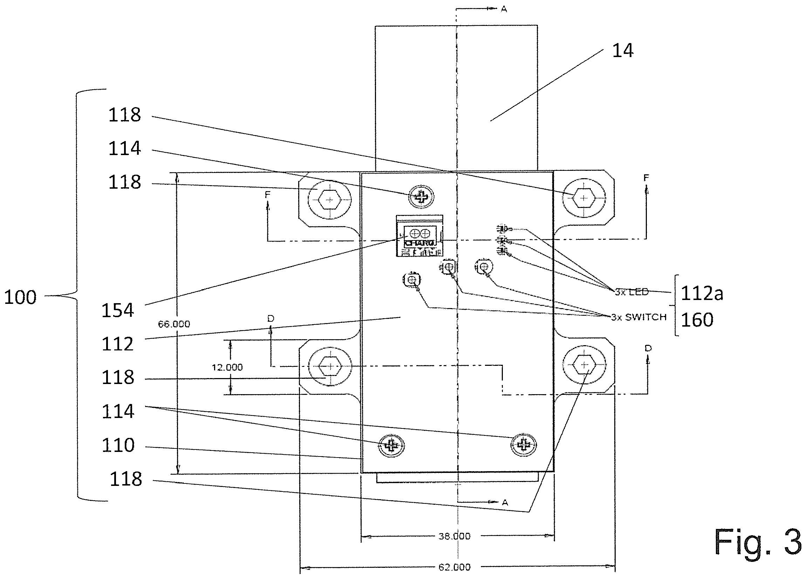

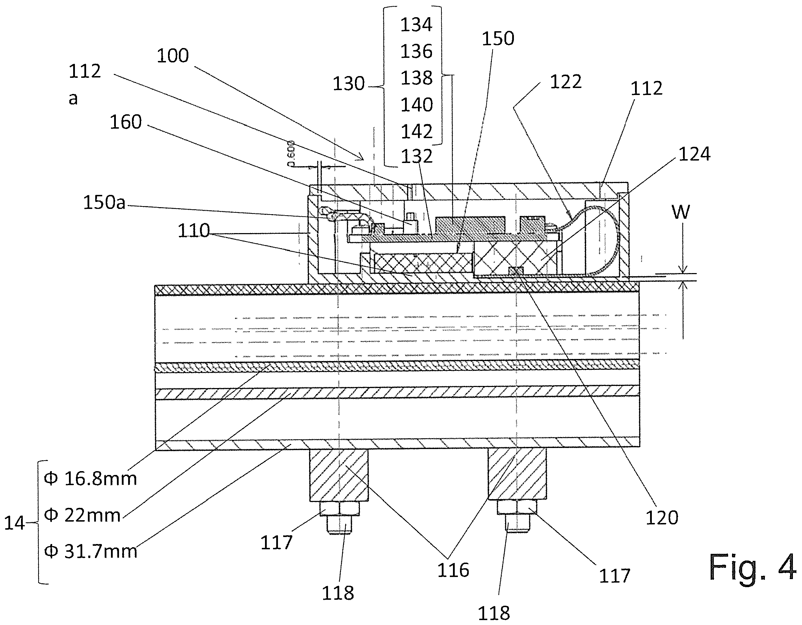

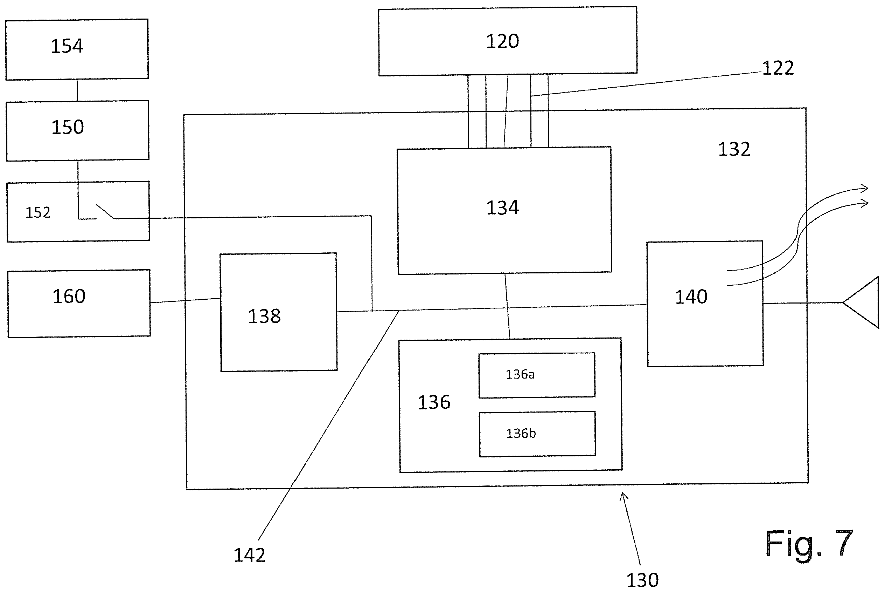

Referring to Figures 2 to 7, there is shown a torque wrench monitoring device 100 for counting the number of fastener tightening operations to predetermined torque value using the torque wrench 10 described above. The device 100 comprises a body 110 to house the components of the device 100, a sensor 120 to sense the impulse generated by a fastener tightening operation, a microcontroller 130 to perform algorithms for analysis of vibrations sensed by the sensor 120, a rechargeable battery cell 150 to provide electrical power to the device 100, and a display 160.

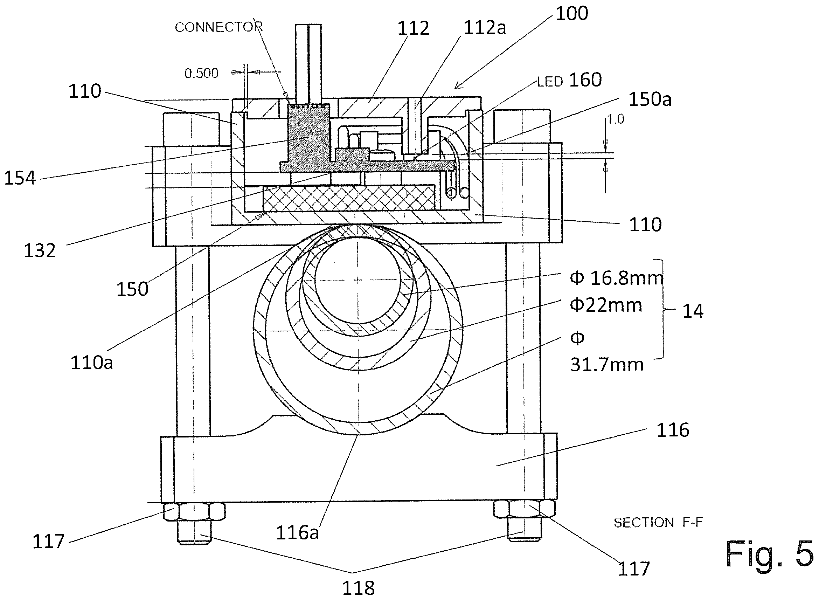

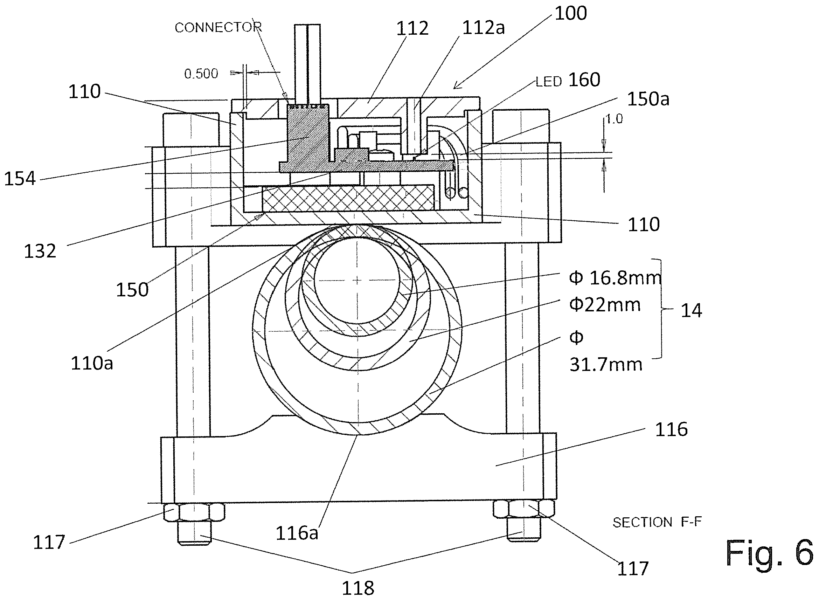

The body 110 comprises a hollow body with a lid 112 fastened to the body 110 by three screws 114. The body 110 and its lid 112 are made of rigid plastics material although they could be made of other rigid material, such as metal. The body 110 comprises a mounting arrangement 116, 117, 118 for releasably mounting the body 110 to an intermediate location along the length of the shaft 14 of the torque wrench 10. The mounting arrangement 116, 117, 118 comprises a pair of brackets 116 connected to the body 110 via four pairs of nuts 117 and bolts 118. The nuts 117 and bolts 118 releasably clamp the shaft 14 directly between the body 110 and the brackets 116. The underside of the body 110 has a curvilinear recess 110a and the top sides of the brackets 116 each have curvilinear recesses 116a. The curvilinear recesses 110a, 116a are adapted to receive a portion of the shaft 14 and help to stabilise shaft 14 with respect to the body 110 while the shaft 14 is clamped by the mounting arrangement 116, 117, 118. The shaft 14 may vary in diameter (i.e. 16.8mm, 22mm or 31.7mm as is shown in Figures 5 and 6), depending on size of the torque wrench 10, and the mounting arrangement 116, 117, 118 is adjustable to clamp the various shaft diameters.

The sensor 120 comprises a three-axis MEMS (Micro Electro Mechanical System) accelerometer 120 which is fixed inside the body 110 adjacent to where the recess 110a receives the shaft 14, to make the path between an impulse produced by the torque transmission mechanism and the sensor 120 as direct as possible and to limit any damping effect caused by the body 120. The present embodiment of the invention uses a MEMS accelerometer 120. However, as the skilled addressee will understand, other types sensors may be used in substitution for the accelerometer 120 to detect vibration or phenomena associated with vibration like, for example, a gyro sensor, a strain sensor or a microphone.

The body 110 has a thickness W of about 1mm where the accelerometer 120 is fixed to the inside of the body 110. Thus, the accelerometer 120 is rigidly connected to the torque wrench 10 when the mounting arrangement 116, 117 clamps the device 100 to the shaft 14. The accelerometer 120 communicates with the microcontroller 130 via a flexible serial link 122. The flexible link 122 helps to decouple and the microcontroller's components from vibrations emanating from the shaft 14.

The microcontroller 130 is on a printed circuit board 132. The microcontroller 130 comprises a central processing unit 134, a memory 136, a signal emitter 138, an input / output interface 140 and a bus 142 which connects the central processing unit 134 to the memory 136, the signal emitter 138 and the input / output interface 140. The printed circuit board 132 is fixed, by three screws 144, inside the body 110 and above the accelerometer 120. A block of foam 124 between the printed circuit board 132 and the accelerometer 120 helps to cushion the microcontroller's components from vibrations emanating from the shaft 14.

The memory 136 is configured to store an application programme 136a and application data 136b. In some embodiments, the application programme 136a and the application data 136b may be software, but in an alternative embodiment the application programme 136a and the application data 136b may be implemented using hardware or a software and hardware combination. The memory 136 may be read only memory, although it may, alternatively or additionally, be an external hard drive, such as a DVD or CD, a flash memory or a separate dedicated storage means such as a server.

The display 160 comprises three light emitting diodes (hereinafter referred to as LEDs) 160 fixed to the printed circuit board 132 and visible from outside the body 110 via three apertures 112a in the lid 112. The microcontroller 130 controls the LEDs 160 via the signal emitter 138. The LEDs 160 may be replaced or supplemented by an audible buzzer and/or a visual display also, controlled by the microcontroller 130 via the signal emitter 138.

The input / output interface 140 facilitates communication, by wired or wireless local area network and/or an internet connection, of data that may be communicated between the microcontroller 130 and an external computer or the internet.

The rechargeable battery cell 150 is fixed inside the body 110 adjacent the accelerometer 120 and under the printed circuit board 132. The battery cell 150 is connected to the microcontroller 130 via the bus 142. The battery cell 150, when charged, provides electrical power to the microcontroller 130 via an on / off switch 152. The battery cell 150 is connected to a battery charger socket 154 located on the printed circuit board 132. The battery cell 150, when discharged, may be recharged by an external power source (not shown) plugged into the battery charger socket 154.

While it is not the case with this embodiment, the skilled addressee will understand that some or all of the components of the microcontroller 130 may be located elsewhere than in the body 110, for example as part of an external computer. This is provided that the microcontroller 130 can communicate with the accelerometer 120 either via the input / output interface 140 or via some other communication means. An external computer may be a personal desktop computer, but in an alternative embodiment, an external computer may be a mobile device, such as a laptop, personal digital assistant, a mobile telephone or other such processing devices.

In use, the microcontroller 130 is switched on by the on / off switch 152 and is ready to receive an acceleration signal detected by the accelerometer 120 when an impulse is received from the torque wrench 10. With the present embodiment of the invention, the term acceleration signal is used to describe the impulse (usually vibration or noise caused by such vibration) generated by operation of a mechanical tool such as the torque wrench 10. However, as the skilled addressee would understand, other types of signal may be generated by operation of a mechanical tool like, for example, light or sound.

It has been proven that the allowed sampling frequency of the device 100 should be related to a wide band, as impulses are usually better reproduced with higher bandwidth and therefore with higher sampling frequencies. In the present application the sampling frequencies have ranged from 800 to 2048 Hz.

The central processing unit 134 runs the application programme 136a stored in the memory 136 and, in doing so, is prepared to analyse the acceleration signal detected by the accelerometer 120, as is explained in more detail below. An accelerometer 120 may detect acceleration signals along three orthogonal axes X, Y and Z. With the present embodiment of the invention, the accelerometer 120 uses mainly the Y axis (i.e. the axis Y that is orthogonal to a longitudinal central axis X-X of the shaft 14 of the torque wrench 10 and comprised within the rotation plane of the torque wrench 10 about the head pin 20) to detect the acceleration signal. However, as the skilled addressee will understand the accelerometer 120 or other sensor may detect vibration, or phenomena associated with vibration, along more than one of these three orthogonal axes X, Y and Z depending on the sensitivity required and/or the nature of different signals produced by different operations of the torque wrench or other mechanical tool.

If the analysis determines that the acceleration signal contains vibration of a genuine torque wrench tightening operation, then the central processing unit 134 increases the number of completed screw fastenings already counted by one and stores this number in the application data 132b part of the memory 132. At the same time, the central processing unit 134 illuminates the LEDs 160 for a short period of time to indicate to the operator of the torque wrench 10 that a torque wrench tightening operation has been counted by the device 100. An external computer may receive application data 136b from the memory 136 via the input / output interface 140 to display and/or monitor the number of torque wrench tightening operation counted by the device 100. Likewise, the external computer may receive the acceleration signal for the purpose of data analysis.

Depending on size and use, torque wrenches may be operated at a tightening torque of between 1Nm and 1000Nm, but the device 100 might work on the same principle also outside these boundaries. The acceleration signal may differ vastly within that range of torque wrench tightening operations. The challenge is to have one application programme 136a which can detect genuine torque wrench tightening operations with an acceptable level of accuracy.

The application programme 136a analyses the acceleration signal to decide whether a genuine torque wrench tightening operation has occurred by analysing specific features of the acceleration signal. The application programme 136a executes a series of algorithms to distinguish these specific features from those of a non-genuine torque wrench tightening operation i.e. an acceleration signal caused by a shock such as an impact caused by dropping the torque wrench 10 or other operations, like moving the torque wrench 10 or hitting something with it. In particular, it has been found that an acceleration signal generated when the torque transmission mechanism is activated (due to a genuine torque wrench tightening operation) has peaks in both the positive and negative directions, showing particular features, typical of a short impact, to be checked against the mean values along the three axes of the accelerometer 120. Shocks, and the like, caused by dropping the torque wrench 10, can be distinguished from a genuine torque wrench tightening operation by using the algorithm to extract characteristics such as the shape, the peak value and/or the timing of the zero crossings of the acceleration signal.

A series of algorithms have been tested to benchmark their efficiency. The algorithms have provided satisfactory results in detecting a genuine torque wrench tightening operation. The algorithms can be separated in two families:
1. a peak detection family; and
2. an event recognition family.

These algorithms can work with an acceleration signal or with a combination of acceleration signals from more than a single sensor (like the accelerometer 120, a gyro sensor, a strain sensor or a microphone) to improve effectiveness, although using more than one sensor may increase complexity.

The first family consists of a series of peak detection algorithms that have been developed working on the maxima, the minima, the standard deviation value, signal envelopes and filters, over different time windows, of acceleration signals coming from the chosen sensors. All of these algorithms require a threshold to look for peak values and an evaluation of each event duration. Although different approaches have been implemented to make the threshold choice automatic, the best solution consists in determining the standard deviation over the noise floor, then considering the threshold as a multiple of this standard deviation. According to the chosen tightening torque limit value, a genuine torque wrench tightening operation may produce quite different acceleration signals which may create quite different conditions for the peak to noise ratio.

The second family of event recognition algorithms consists in finding a specific pattern inside acceleration signals. Thus, it is a shape recognition algorithm. The application programme 136a seeks a specific shape, buried in a noisy acceleration signal, almost independent from its absolute peak level (although some threshold levels need to be fixed, as better described in the following). Different approaches have been attempted in this case too, such as wavelets (whose aim is to look for the similarity of a signal to the chosen wavelet family).

In the case of both families, the application programme 136a converts the acceleration signal into its second order derivative, as this helps to detect how "peaky" a peak in an acceleration signal is, independent from the acceleration signal amplitude.

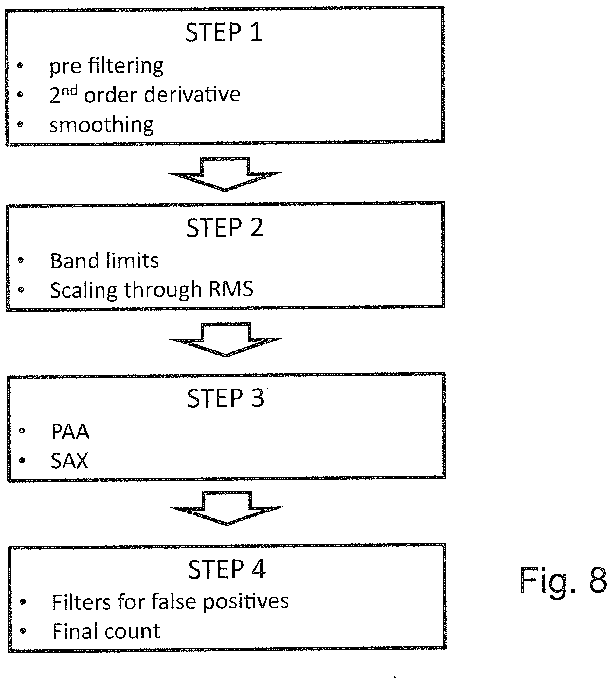

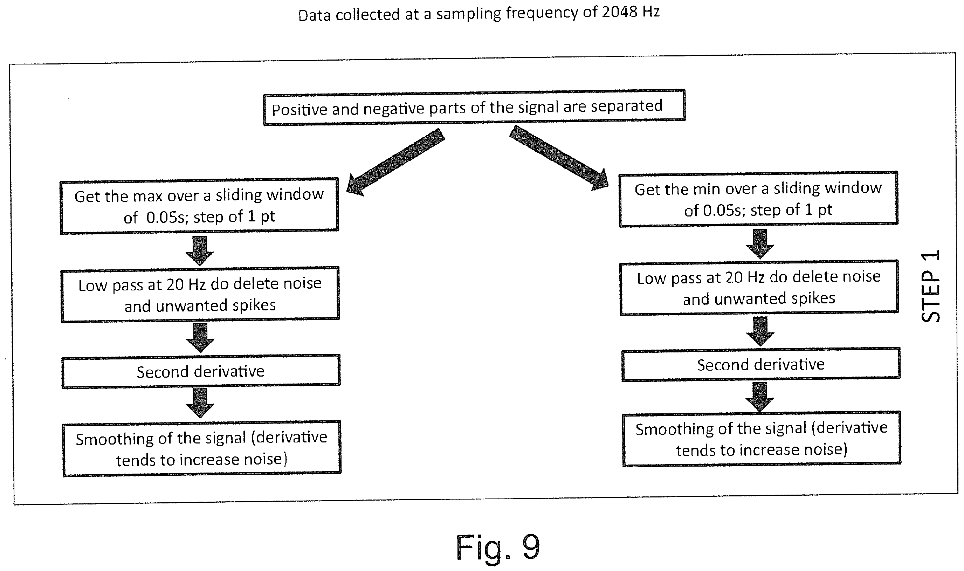

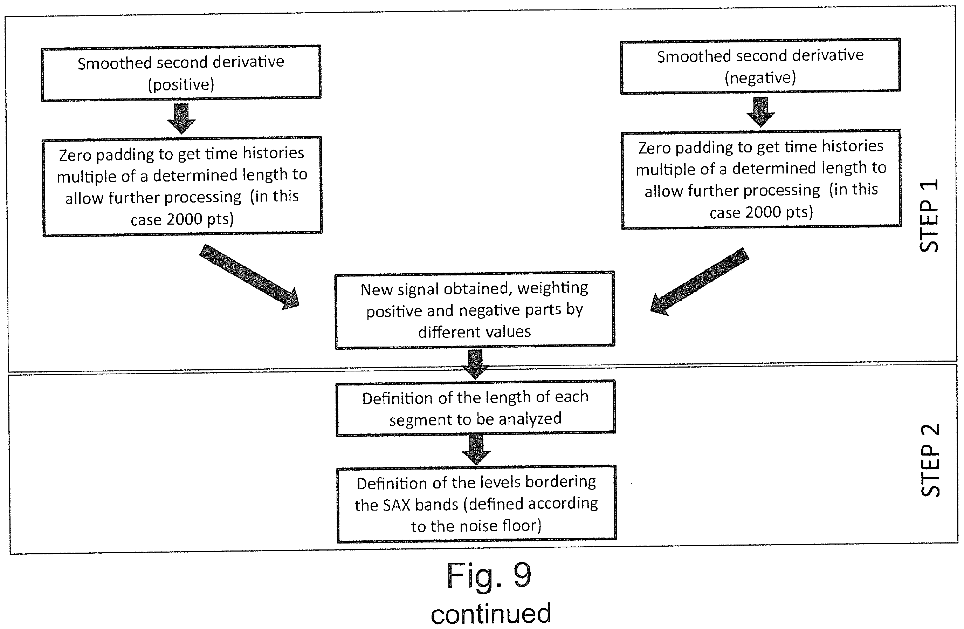

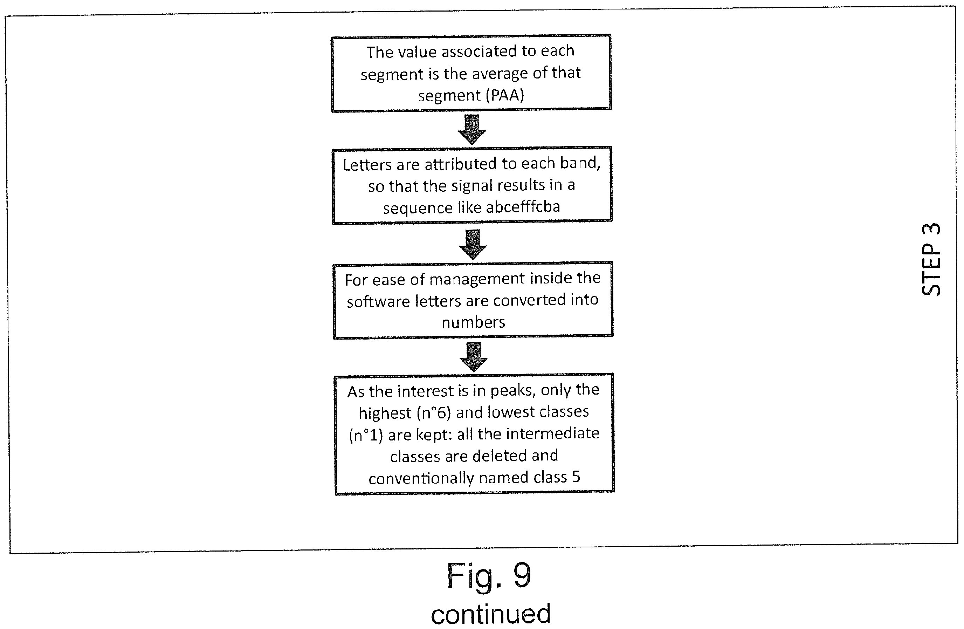

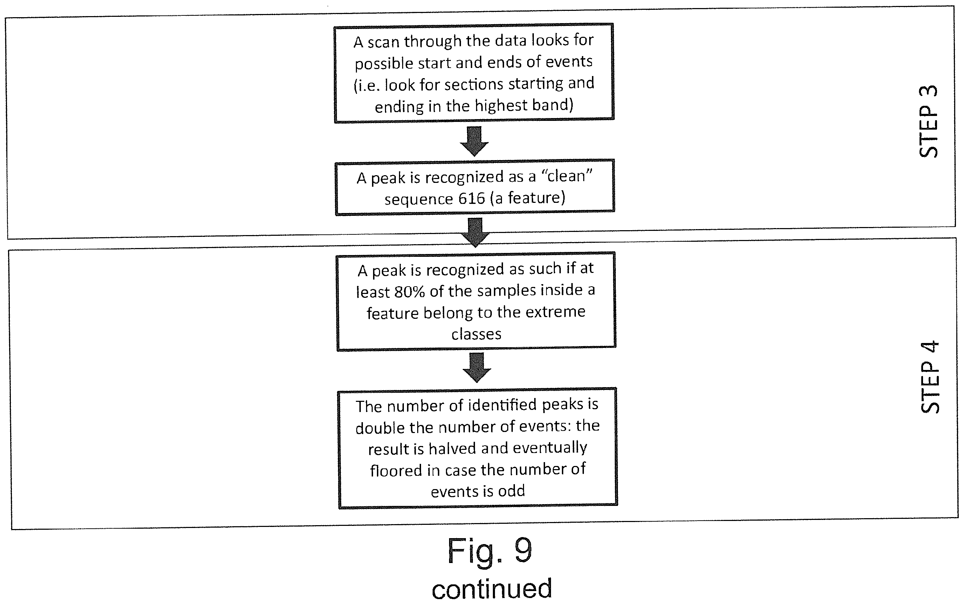

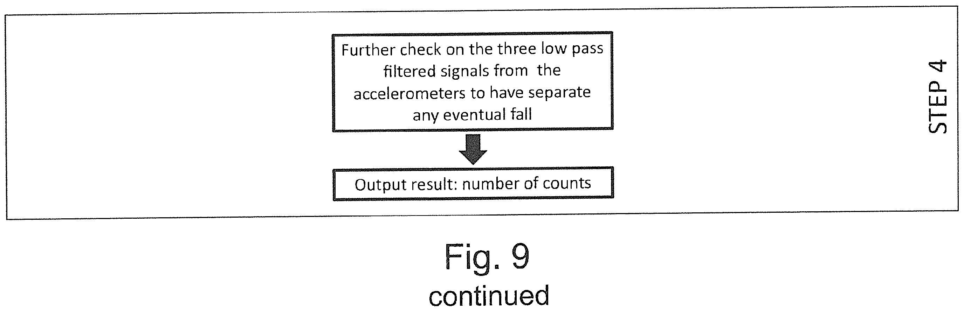

Referring to Figures 8 and 9, a general summary of a event recognition algorithm executed when the central processing unit 134 runs the application programme 136a is as follows.

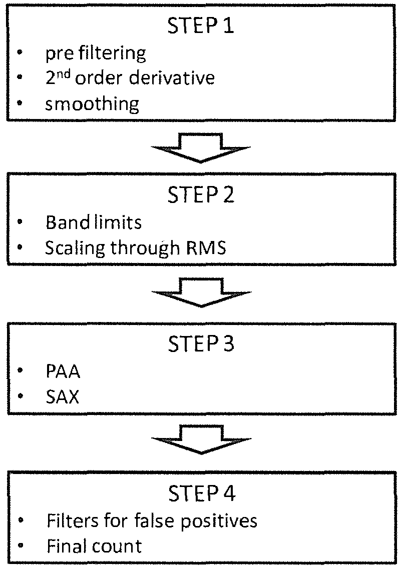

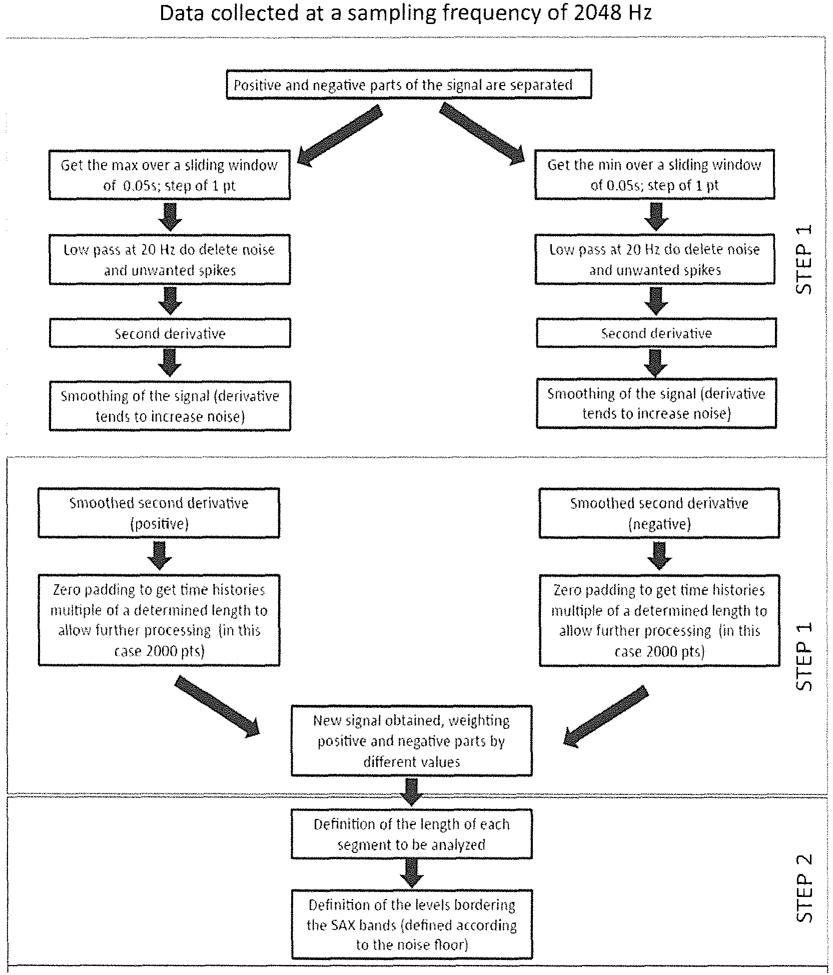

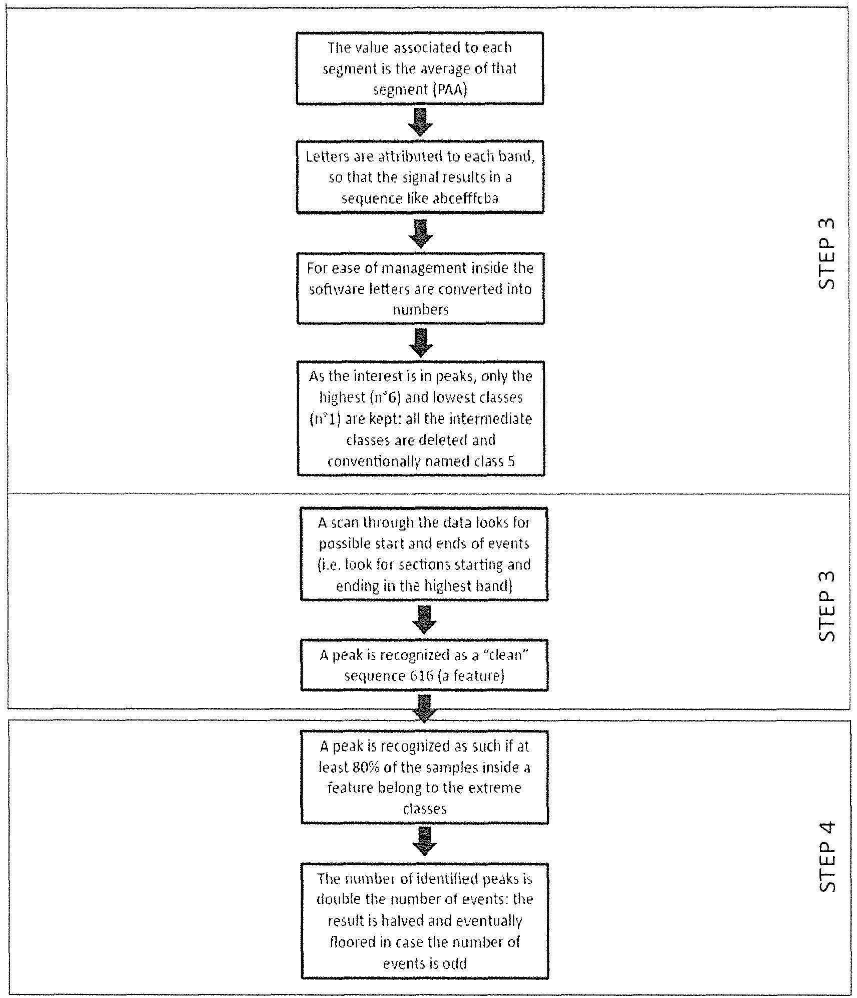

In the first step of the algorithm, a second order derivative of the acceleration signal is calculated. The second order derivative signal measures how the rate of change of the acceleration signal is itself changing. As part of the first step, the second order derivative signal is subjected to a low-pass filter. This removes frequencies that are too high to be relevant to properly describe the process, also smoothing the signal from unwanted noise.

In the second step of the algorithm, a series of parameters to perform the next phases has to be fixed. Among others, the thresholds of the actual acceleration signal are calculated for their representation in a simple form, as well as the length of the time records to be analysed. As part of the second step, the acceleration signal is subjected to a low-pass filter and its standard deviation value is measured, to properly fix these thresholds which are a function of the adopted sensor.

In the third step of the algorithm, the second order derivative signal is converted to a digital or symbolic representation using dimensionality reduction methods carried out through the piecewise aggregate approximation (PAA) and then symbolic aggregate approximation (SAX) methods. This may be performed using available software.

In the fourth step of the algorithm, the results obtained in the third step are verified, deleting false positives from the genuine events count.

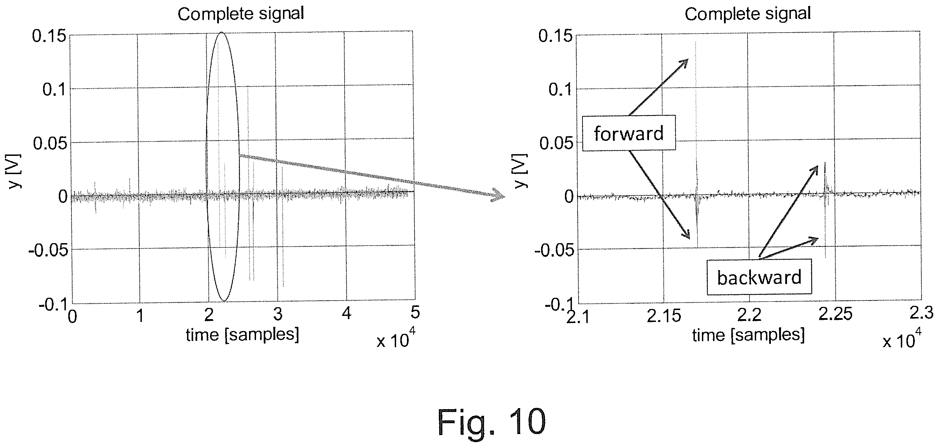

Referring to Figures 10 to 20, the first step of the algorithm is described, in which the second order derivatives of the original acceleration signal are calculated.

Initially, the application programme 136a acquires the acceleration signal from the accelerometer 120. Each torque wrench tightening operation causes two pairs of positive and negative peaks in close succession along the acceleration signal. The leading pair of positive and negative peaks is associated with a forward direction click of the torque transmission mechanism (i.e. when the elongate shaft 14 moves in a clockwise direction CW towards the torque bar 18) and the trailing pair of positive and negative peaks is associated with a reverse direction click of the torque transmission mechanism (i.e. when the elongate shaft 14 moves in a counter-clockwise CCW away from the torque bar 18). The acceleration signal of Figure 10 represents three torque wrench tightening operation i.e. three sets of two pairs of positive and negative peaks. The same Figure 10 also provides a detail of how the first couple of clicks (i.e. a forward direction click and a reverse direction click) corresponding to a single event.

The application programme 136a works separately on the positive and negative signal components, as a genuine peak is sensed in both directions though having different levels depending on whether there has been a forward direction click or a reverse direction click of the torque transmission mechanism, as is shown in Figure 10.

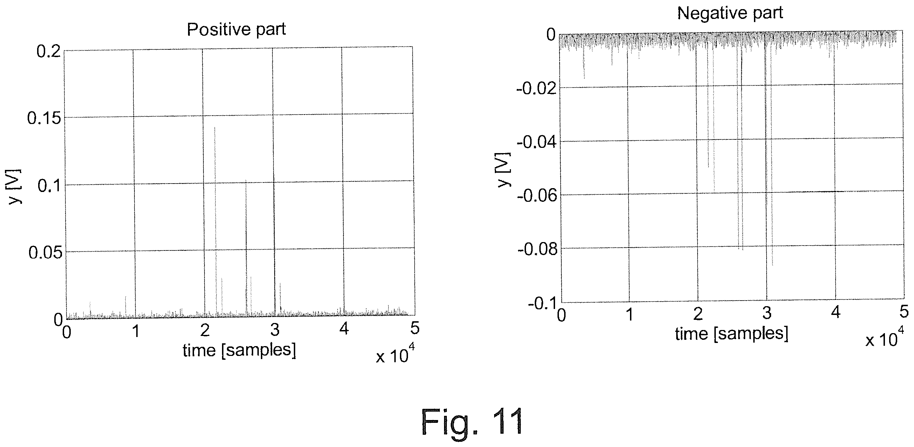

To obtain both the positive and the negative components of the acceleration signal, an element of the acceleration signal is judged in respect of zero. Those values not fulfilling the requirement are put equal to zero, as is shown in Figure 11 for the positive and negative parts.

The positive and negative data are stored in two separate arrays, saved in the application data 136b part of the memory 136.

Once the two vectors have been created, the maxima and minima are evaluated over a sliding window. Note that, for ease of use of the written algorithms, the negative component, working on the minima, has been changed in sign, so that the same algorithm used on the positive component can be used in the same way on the negative component. When the positive and the negative components of the acceleration signal will be composed again, the negative component of the acceleration signal will be reversed again, before summation.

The application programme 136a performs a loop with a moving window over a time interval of 100 points, which, in the case of the sampling frequency that is assumed to be 2048Hz, like in most preliminary tests, corresponds to a 0.05 second wide window. This is being carried out to look for maxima on the positive component of the acceleration signal and for minima in the negative component of the acceleration signal. The chosen number of points is tailored to the sampling frequency, to maintain a time window of approximately the same length of about 0.05 seconds. The loop slides of one point each cycle.

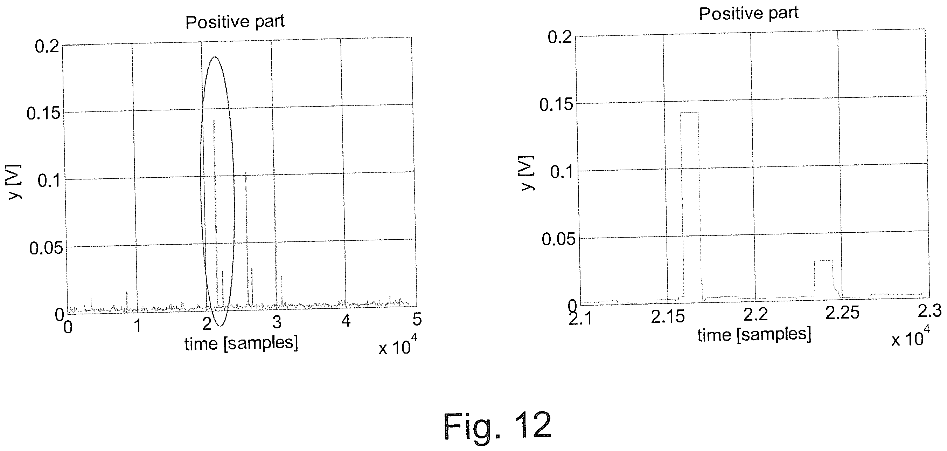

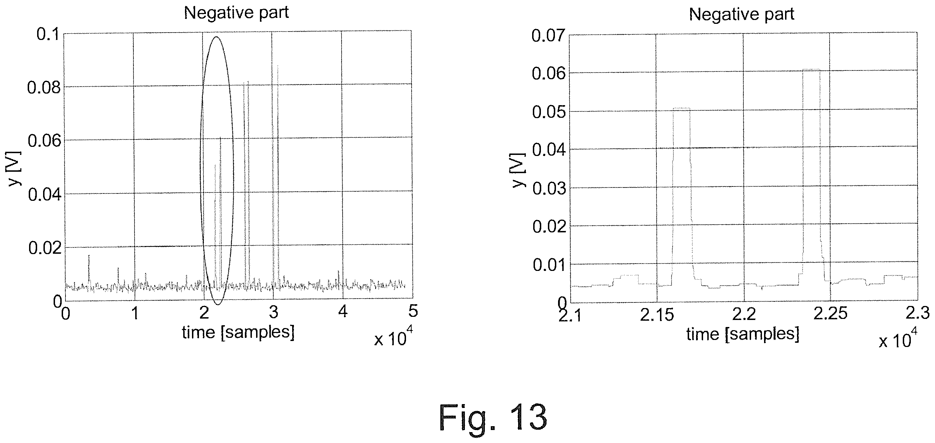

Referring to Figures 12 and 13 there is shown the output from this operation for the positive (Figure 12) and the negative (Figure 13) components of the acceleration signal together with a zoom around the first genuine event. The different ratios in the positive and negative components of the acceleration signal between the forward and reverse direction clicks are quite evident.

The application programme 136a seeks the peak in each time interval. The maxima peaks are detected several times, as the window slides over them. That explains why the shape of this function appears squared, requiring some further operation (see again Figures 12 and 13).

The application programme 136a subjects the positive and negative components of the acceleration signal to a low-pass filter to eliminate random noise (i.e. 20Hz and above) and preserves the lower frequencies, which are deterministic and related to genuine torque wrench tightening operations.

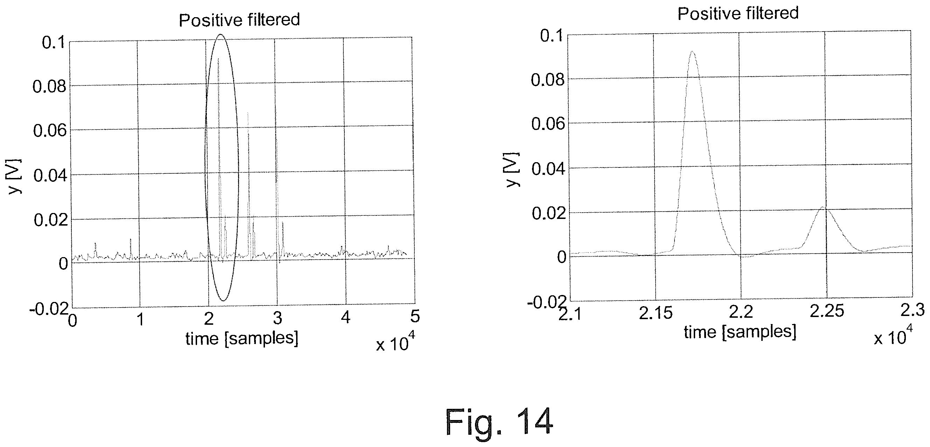

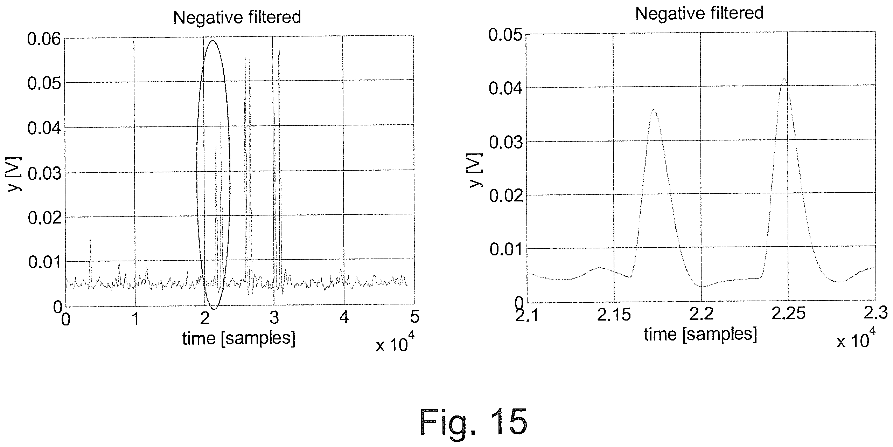

This filter results in smoothing the peaks which are no longer squared in shape, and now allow to be better managed for their recognition. Charts showing examples of positive and negative components of the acceleration signal after the filter are shown in Figure 14 and 15, with a zoom around the first genuine torque wrench tightening operation.

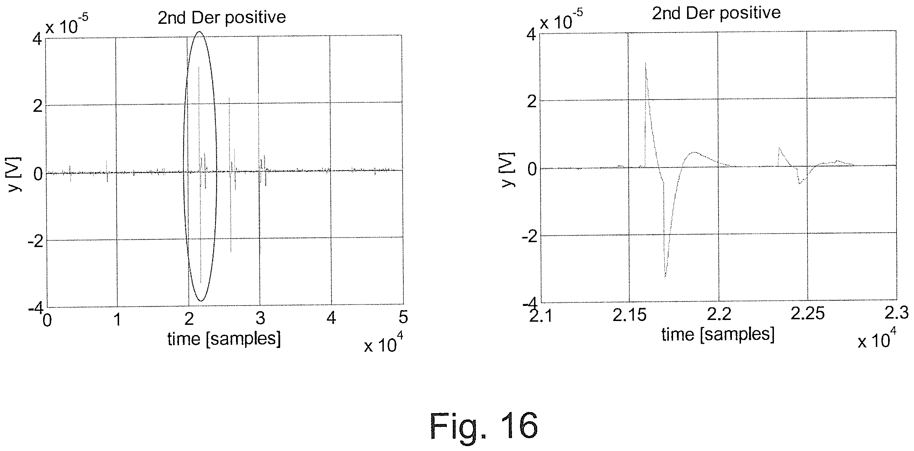

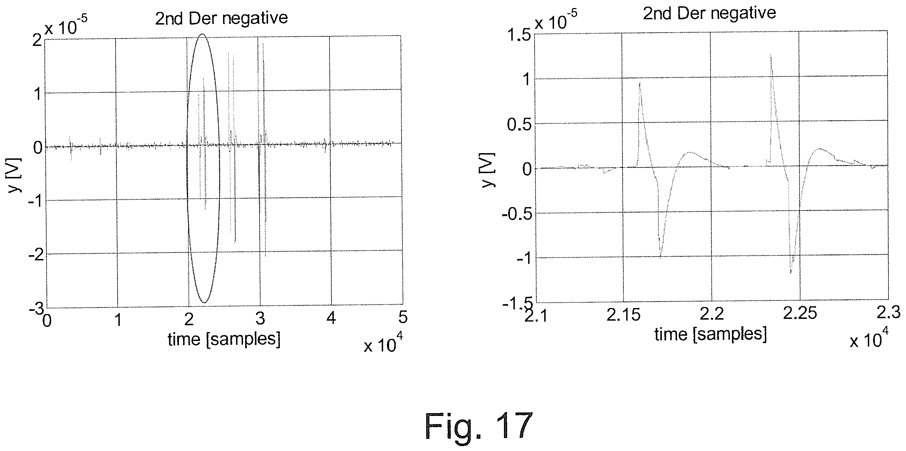

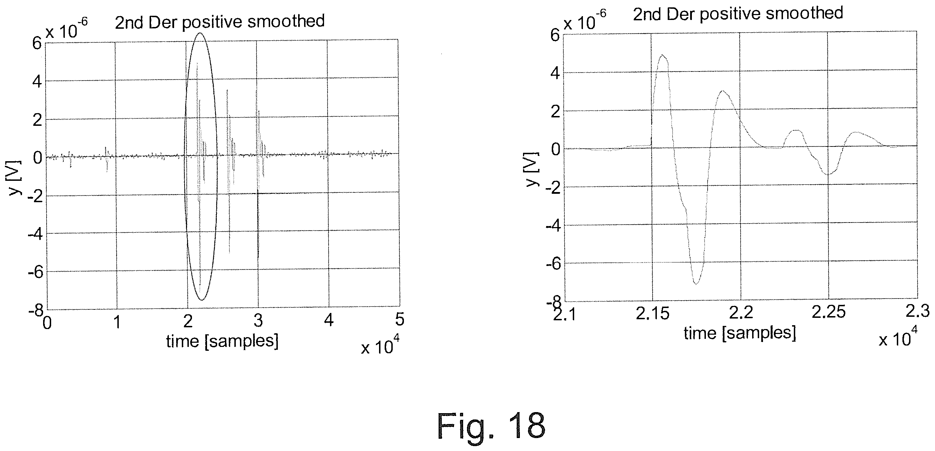

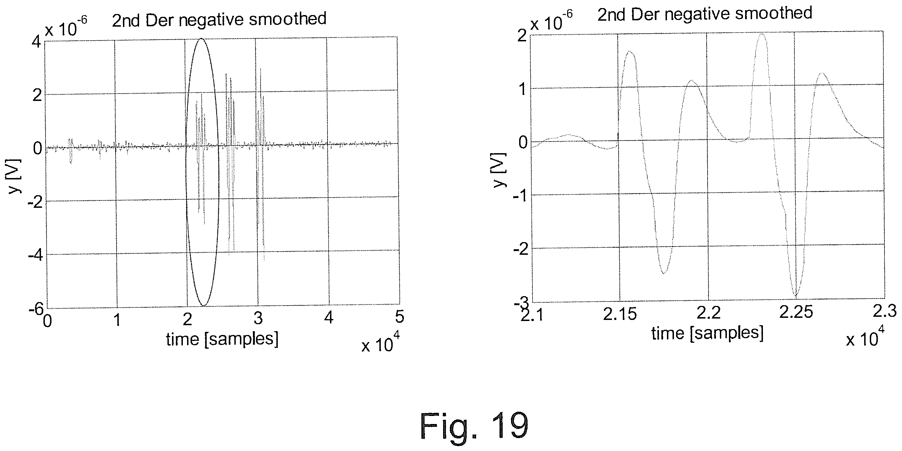

Following the filter, the application programme 136a calculates the second order derivative of the positive and negative components of the acceleration signal, as is shown in Figures 16 and 17. Following the calculation of the second order derivative, the positive and negative components of the acceleration signal are subjected to moving average smoothing, as is shown in Figures 18 and 19. This is by no means a superfluous intervention because applying a second order derivative to a signal tends to increase its higher frequency noise which is diminished by smoothing.

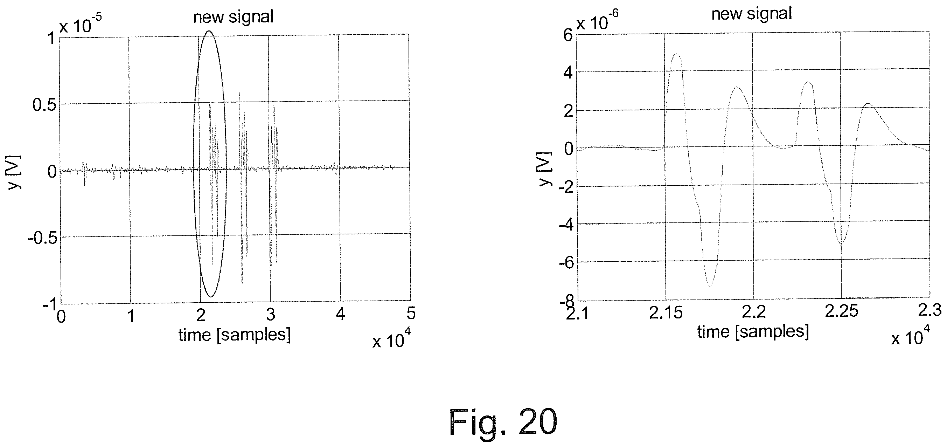

At this point the positive and negative components of the second order derivative signal are summed back together, as is shown in Figure 20, each weighted by a specific coefficient, tuned on the particular kind of sensor used, and accounting for the mentioned symmetries and asymmetries in the forward and reverse direction clicks of a genuine torque wrench tightening operation.

Sometimes the amplitude of negative component of the acceleration signal in a reverse direction click of the torque transmission mechanism is higher than that of the acceleration signal in forward direction click of the torque transmission mechanism. Based on this situation, the positive and negative components of the second order derivative signal are combined to reduce this inequality. Thus, the second order derivatives of the acceleration signal is given as follows: (data) = 0.5 x positive second order derivative signal + 1.5 x negative second order derivative signal, as is shown in Figure 20.

This closes the first step and enters the second step.

Some parameters have to be chosen and eventually fine tuned to the specific sensor adopted. In detail, as the next evaluations tend to create a simplified and rougher defined second order derivative signal, both the time and the vibration level resolutions have to be determined. Some specific preliminary testing may help to fix these parameters.

At this stage the application programme 136a decides for instance the number of intervals, the number of breakpoints (in this case five), limiting the bands for the new definition of the second order derivative signals, described in the following.

The application programme 136a calculates the size of each interval to be analysed, that is the final resolution in time for the PAA algorithm, as is described later.

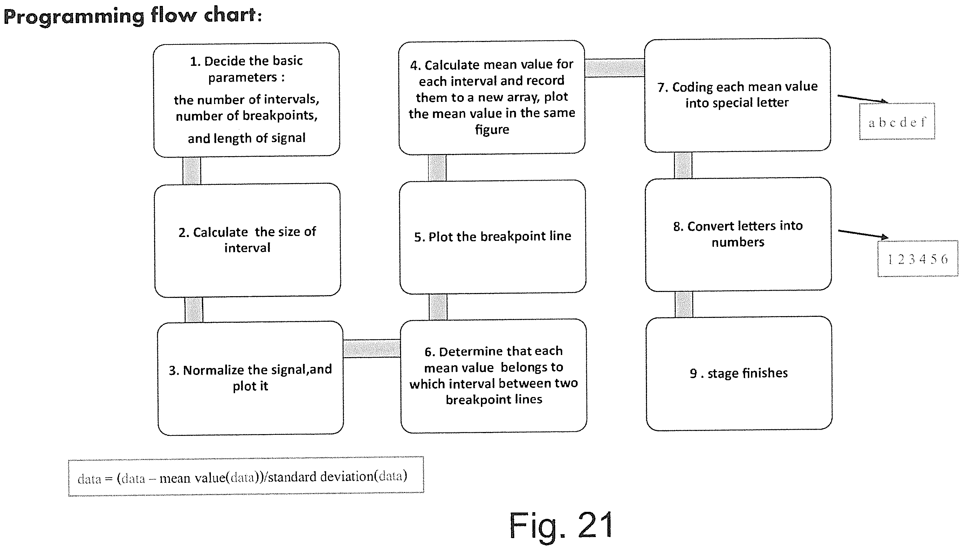

Once the main parameters have been defined, step 3 starts. As this is the most complex part, a specific flow chart of this sequence is provided, as is shown in Figure 21. This flow chart is of the algorithms followed by the application programme 136a during the third step.

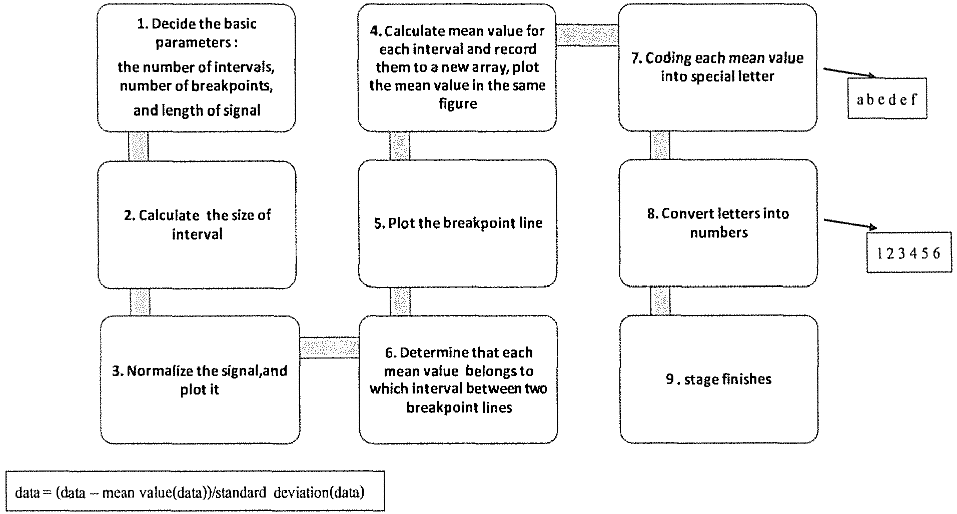

One of the important parts in step 3 consists in obtaining the PAA of the second order derivative signal, meaning that for each segment in which the time history has been divided, the average inside that segment is calculated. From now on each segment is linked to this average, kept constant all through the interval.

The PAA representation can be visualized as a way of modeling a time series with a linear combination into box basis functions. A sequence of a certain length may be reduced to a smaller number of dimensions with respect to the original (provided by the A/D converter dynamics). The signal is divided into intervals, then the mean value for each interval is calculated, and the mean values are stored.

Having transformed the second order derivative signal into a PAA representation, the algorithm applies a transformation to obtain a discrete representation having breakpoints. A time series is described by first obtaining a PAA and then using predetermined breakpoints to map the PAA coefficients into digital symbols. These break points represent percentiles of a Gaussian distribution of the second order derivative signal but they can be chosen according to different criteria. The distribution is affected by both the signal noise floor and the number of peaks. This turns out in a sort of scaling of the original acceleration signal, according to its standard deviation, which determines the breakpoints. The application programme 136a scales the original acceleration signal in this way. The mean is subtracted from the original acceleration signal and then normalized by its standard deviation (or a proper multiple of it).

The calculation of the PAA loop is repeated for each of the segments in which the time history has been divided. It is also observed that this approach significantly reduces the amount of data to be stored with respect to the original time history.

The application programme 136a then determines where each mean value belongs among the intervals between the breakpoint lines, also named "cut-lines".

The application programme 136a codes the choices into letters. Thus, the SAX, which consists in running the SAX algorithm over the actual second order derivative signal. In other words, one element of each interval (mean value) in PAA is extracted. This loop is repeated by the algorithm for each segment. With the present example, this happens every 25 points in a time history sampled at 2048 Hz. Then the algorithm performs the following judgement.

If PAA(i)<-09.97 then symbol(i) = 'a';
if PAA(i)>=-0.97 and PAA(i)<-0.43 then symbol(i) = 'b';
if PAA(i)>=-0.43 and PAA(i)<0 then symbol(i) = 'c';
if PAA(i)>=0 and PAA(i)<0.43 then symbol(i) = 'd';
if PAA(i)>=0.43 and PAA(i)<0.97 then symbol(i) = 'e'; and
if PAA(i)>=0.97 then symbol(i) ='f.

The term 'symbol' refers to a new array of letters only.

Referring to Figure 22, there is shown a plotted chart of how PAA interprets the actual second order derivative signal. The time series is mapped to a letter string like, for example, *'baabccbc'.* In the application programme 136a five breakpoints are used which means that there are six intervals .

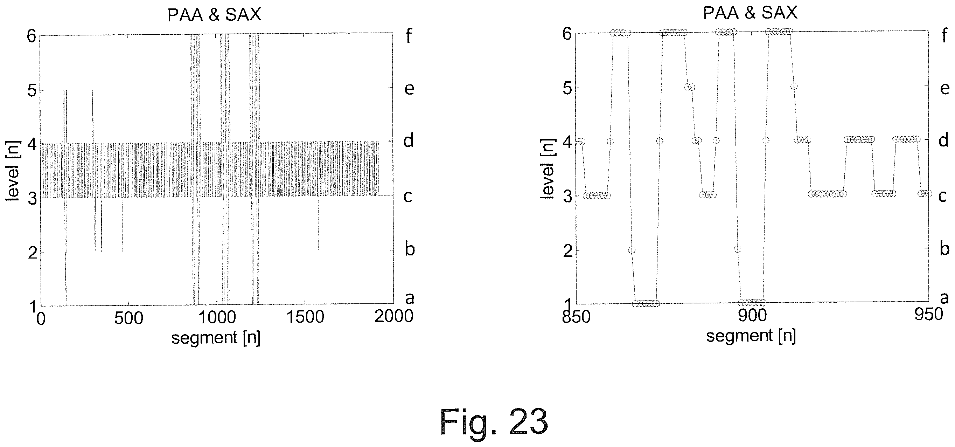

As described, the application programme 136a converts the second order derivative signal into a sequence of letters, each sequence being a block of 2000 intervals. This means that each sequence is made up of 2000 letters in a row. Figure 23 shows these last steps carried out on the real second order derivative signal used as an example. The six bands are now clearly seen both in the general file and in a zoom around the first genuine event.

The application programme 136a identifies a sequence of letters that may trace a peak. A peak is identified by one or more letters 'f' followed by one or more letters 'a' then followed again by a series of letters 'f': this sequence is named a "feature" and the next steps consist in identifying such a feature from the original second order derivative signal. The jumps between the two extreme bands are expected to be rather fast, as better explained below.

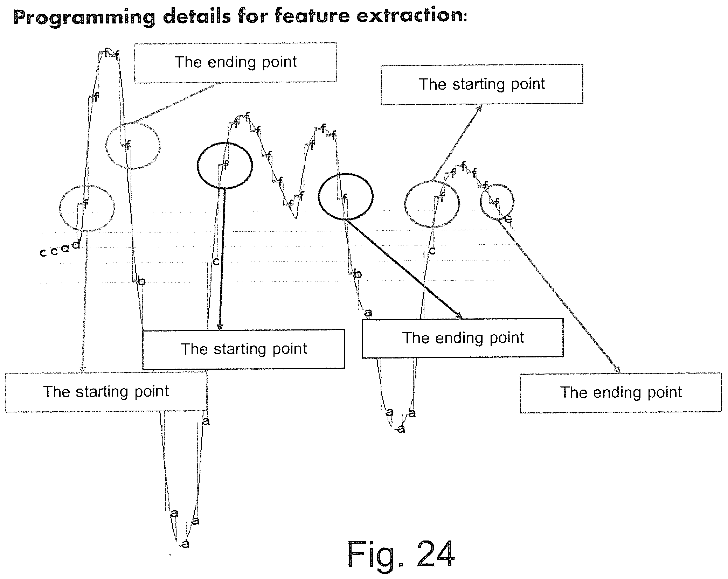

Referring to Figure 24, the parameter identification works as follows:
1. the first feature can be described as a sequence of letters such as 'f f f f f b a a a a a a c f f f f f f f f f f f';
2. as already described, a feature of the second order derivatives must contain an initial letter 'f' (meaning a peak), or a sequence of letters 'f', then a letter 'a' (meaning a valley), or again a series of letters 'a'; and in the end again a letter 'f' or a sequence of letters 'f'. The application programme 136a scans the sequences of letters for this trend. One such sequence of letters is referred to as a 'feature';
3. as peaks are often very close each other, scanning of a complete sequence allows detection if a letter 'f' has to be considered as the start or the end of a feature. Each new sequence of letters 'f' is detected in its initial and final value, to separate each single peak, as detailed in Figure 24. A further control checks if at least one letter 'a' is between two letters 'f' (a minimum between two maxima). This is needed to separate genuine torque wrench tightening operations from other events producing single peaks similar to those of the torque limiting device;
4. as during a genuine torque wrench tightening operation, the acceleration signal shows a peak and it stays most time at the two extreme classes, a further check is performed Inside a single feature, letters 'f' and 'a' must account for more than 80% of the sample, to consider the feature as a real click of the torque transmission mechanism. This is another filter to separate genuine torque wrench tightening operations from other events, like falls or rough operation

Note that a valid feature must correspond to the trend of letters 'f' - a - f'. This has been considered a reliable choice, though it is not excluded that a similar approach on slightly more complex features can bring satisfactory results. Other parameters could be changed, like the record length or the size of the bands.

This is the general explanation of how the identification algorithm works. In practice, the application programme 136a adopts a simplified approach, by reducing the letter classes to three: i.e. letter 'a', letter 'f' and a third class grouping all the other letter classes which are considered not relevant to the feature identification. This means that the main interest is devoted to the extreme values, which are indications of a genuine torque wrench tightening operation.

Returning to Figure 23, the application programme 136a further converts the letters coded in step 2 into numbers (see double scale of Figure 23, left and right), for ease of use inside the software. This aspect of the application programme 136a may seem unnecessary. However, it preserves the PAA and SAX approach (i.e. working with letters) while at the same time nesting it within more complex procedures which requiring more calculations and can only be easily managed through numbers.

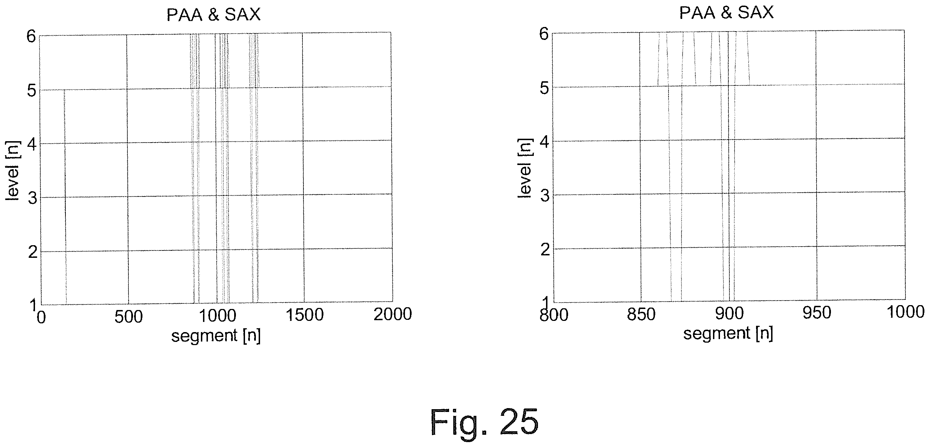

At this point, as the main interest is for extreme values, the first (1, the same as letter 'a') and last (6, the same as letter 'f') classes are maintained, while all the mid-classes are lumped into a single class, referred to as class 5, as is shown in Figure 25.

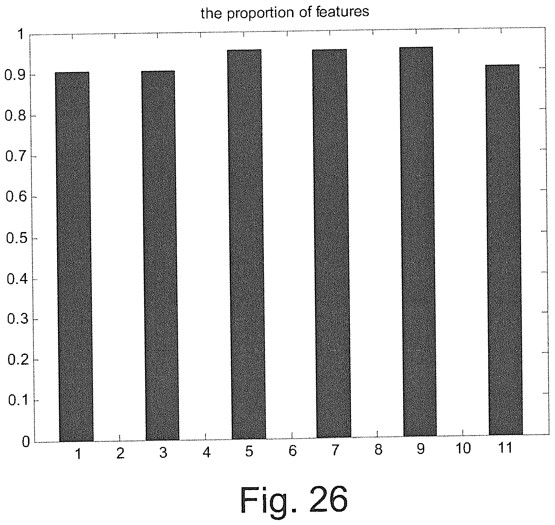

Referring to Figure 26, there is shown a bar chart of PAA interpretation of second order derivative signals which shows that there have been six features (i.e. clicks of the torque transmission mechanism), staying in the extreme classes (i.e. classes 1 and 6) for more than 80% of the samples (this is given on the y axis). These are to be divided by two as each torque wrench tightening operation has two associated peaks. Dividing by two can help to delete peaks which are not associated to a genuine torque wrench tightening operation and which produce an odd count of events. This final step closes the procedure to obtain the peaks.

The application programme 136a performs a final check, which has provided more than satisfactory results, due to the fact that a MEMS accelerometer 120 is gravity sensitive (unlike a piezo accelerometer, for example). This approach consists in analysing signals detected by all three axes of the accelerometer 120, and using a low-pass filter, to use the MEMS accelerometer 120 as a series of clinometers, in case of a fall. In fact, it is not possible that a fall is a pure translation, so changes in the mean values can help understanding that the torque wrench 10 is falling. This is another possibility to delete spurious peaks out of the count. Additionally, the time duration of the events may be used to delete spurious peaks: a click is very fast, while a fall lasts longer.

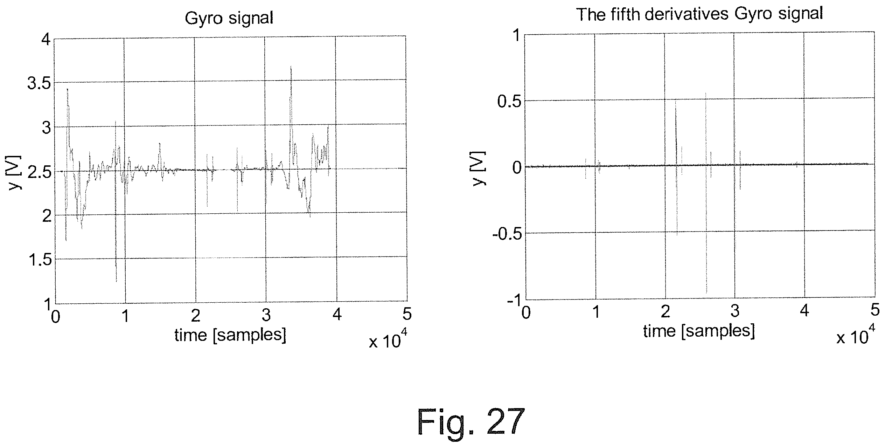

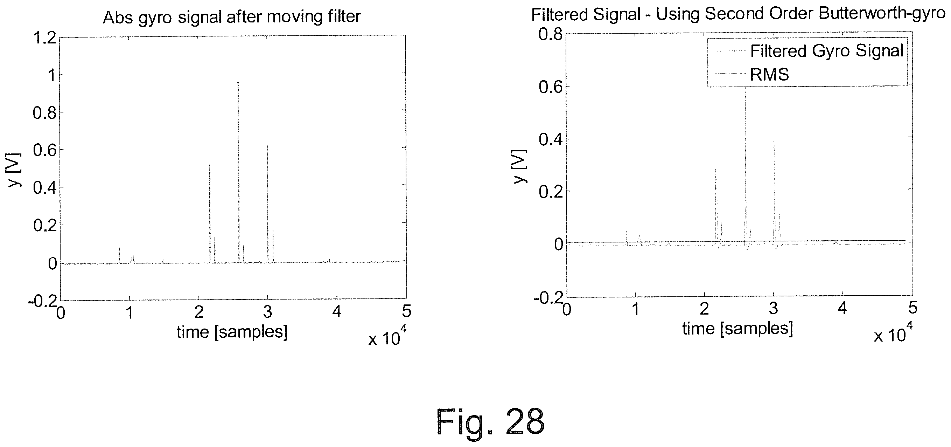

Further possibilities, already being tested, consist in joining the data from an accelerometer to those derived for example from a gyro sensor. Some attempts are shown by Figure 27 and 28 with a gyro sensor, having an inferior signal to noise ratio with respect to the accelerometer 120. However, proper filtering and derivation brings this signal in a situation close to that of the accelerometer 120, leading to the recognition of the same three peaks (results refer to the same test which produced the accelerometer data used to describe the application).

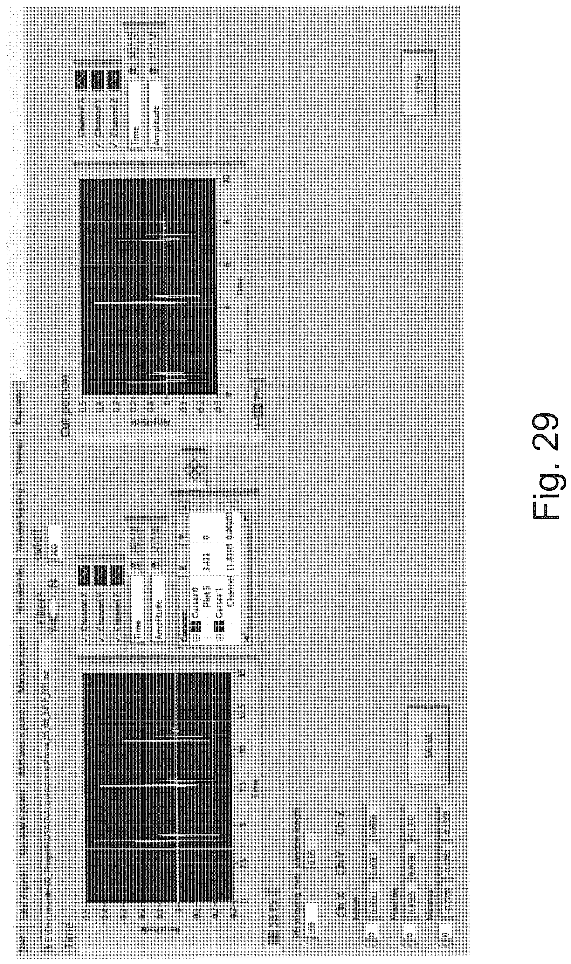

Referring to Figures 29 to 36, a series of approaches belonging to the peak detection family have also been attempted, working on several peak detection algorithms, relying on various techniques alone or in combination. Some promising approaches have been executed using a Labview based programme, to allow for a direct comparison and provide summary of their efficiency. Figures 29 to 26 show screenshots from this software:
Figure 29 is a starting page which allows selection of a file (it works off-line, on previously acquired data) and to selection of a portion of the time record

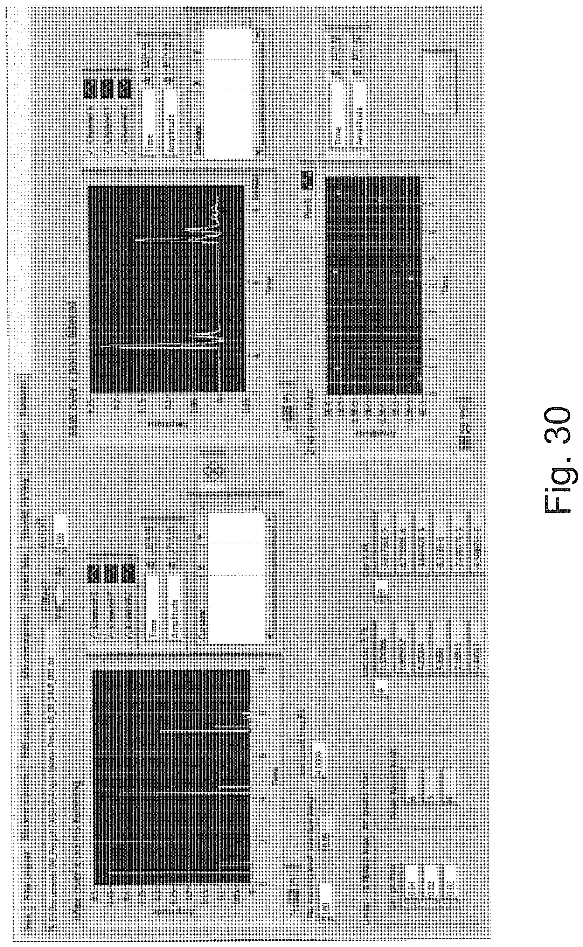

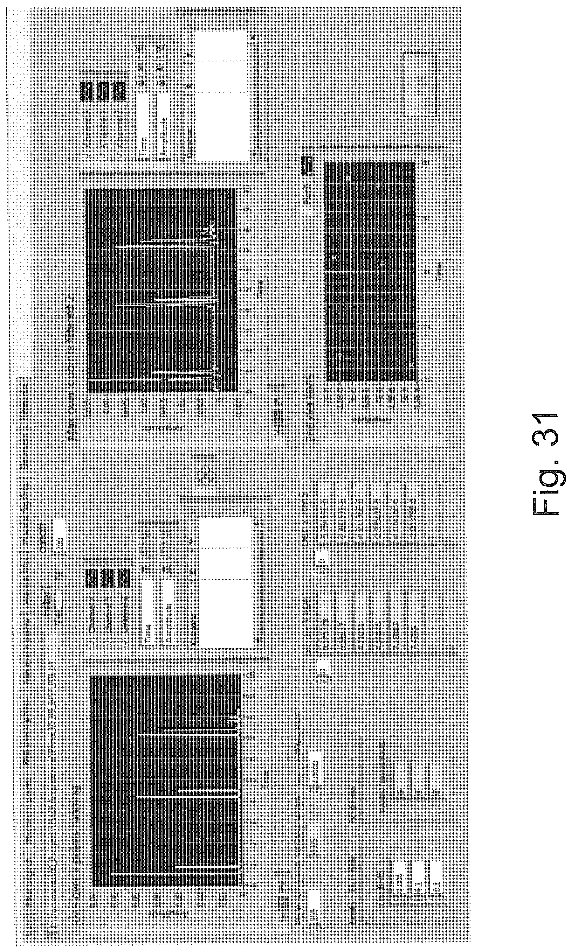

Referring to Figure 30, this is the maximum over a sliding window of n points (in this case 100). Top left: the raw output of this operation, which is then low pass filtered (4 Hz), producing the output seen at the top right. Squared peaks are smoothed allowing for an easier peak detection. Bottom left: the threshold values over which the algorithm looks for peaks, aside the number of peaks found. This has then been turned into an adaptive approach fixing the threshold as a multiple of the RMS. In the end (bottom right) the second order derivative of these peaks is calculated and plotted to account for the differences in the forward and reverse clicks of the torque transmission mechanism. Six peaks are identified, with clearly different second order derivatives, pointing out a different "peakness" in the signals
Figure 31 shows the same situation as in Figure 30 but the parameter used is the standard deviation (in this case equivalent to the RMS, as the accelerometer used was a piezo). Again six peaks are identified, with different second order derivatives for the forward and reverse clicks of the torque transmission mechanism.

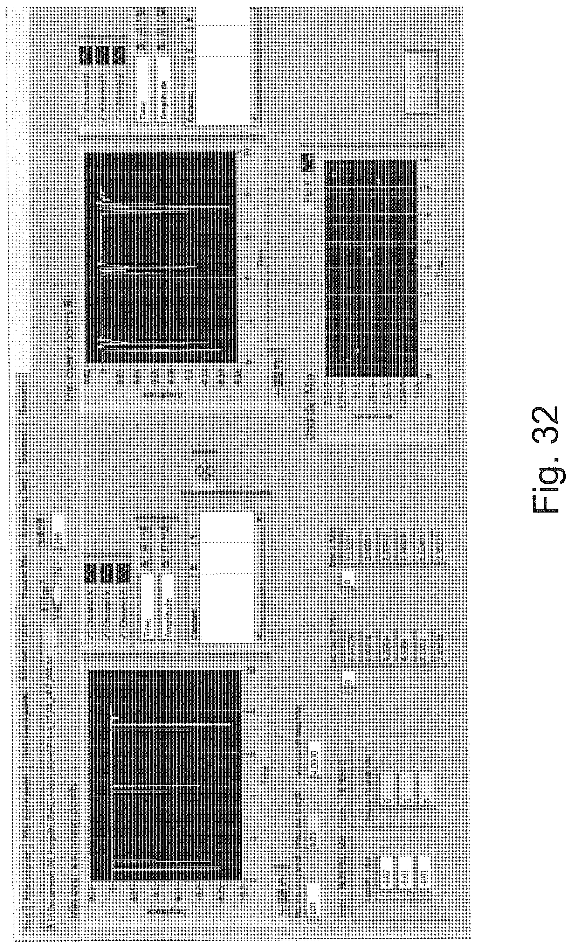

Figure 32 shows the same situation as in Figures 30 and 31, but the parameter used is the minimum. Again six peaks are identified, but the second order derivatives are closer to each other as there is not a big difference in the negative part of the acceleration signal between the forward and reverse clicks of the torque transmission mechanism.

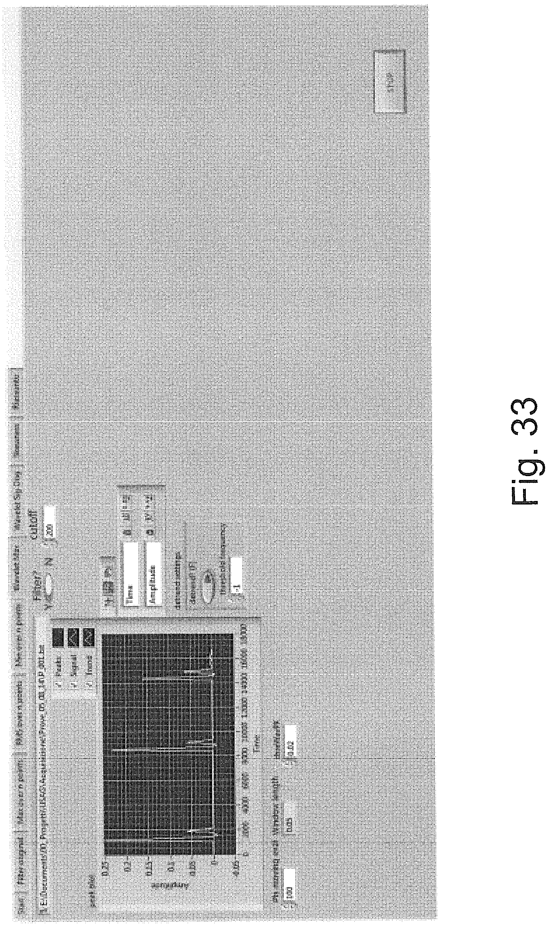

Figure 33 shows a different management of the maxima. The algorithm used to detect peaks is carried out by means of a wavelet analysis. Six peaks are identified.

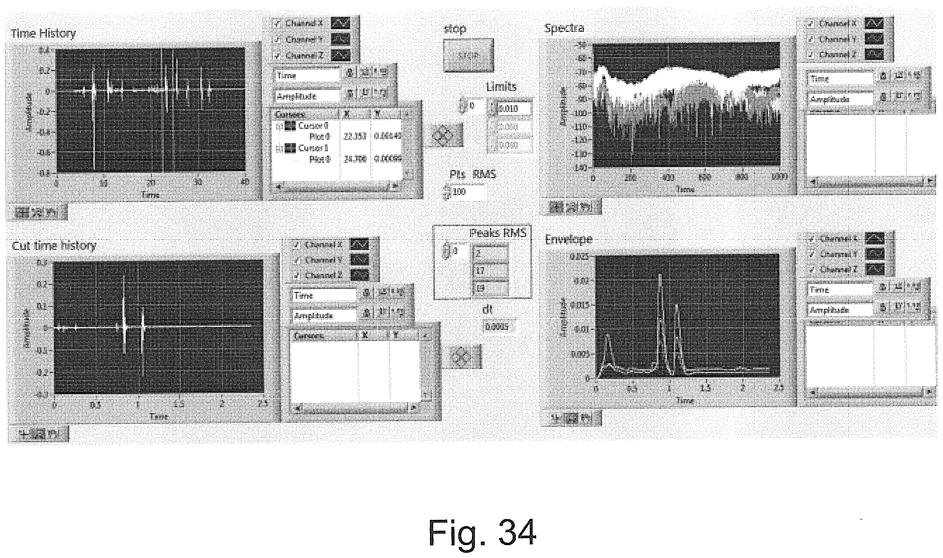

Figure 34 shows another approach in which the acceleration signal's spectra or the acceleration signal envelope is used to define a more clear peak and is then smoothed by low pass filtering.

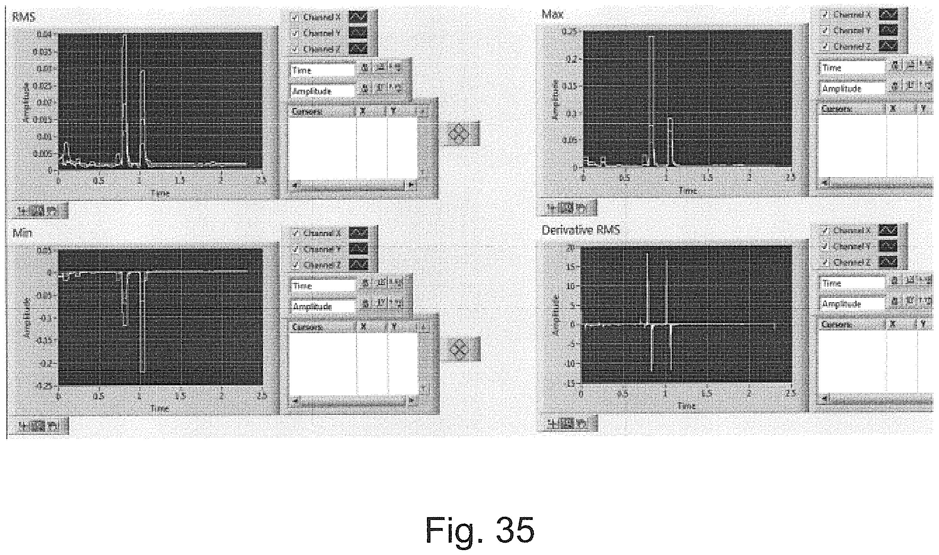

Figure 35 shows how the peaks may be enhanced by the RMS of the second order derivative.

## Claims

1. A device (100) for determining and counting operations of a tool (10) equipped with a mechanism (18, 22, 24, 26) that produces vibration upon operation to a predetermined value, wherein the device (100) comprises:
a sensor (120) for detecting vibration and emitting a detection signal based upon the vibration;
a mounting arrangement (116, 117, 118) for releasably mounting the sensor (120) to a tool (10) in such manner that vibration from a mechanism (14,18,24) of said tool (10) is transmittable to the sensor (120);
a microcontroller (130) for receiving a detection signal from the sensor (120) and determining and counting operations of said tool (10); and
a power supply (150) for supplying electrical power to device (100),
wherein the microcontroller (130) calculates a second order derivative of a filtered detection signal and determines operation to the predetermined value based on analysis of the second order derivative signal.

2. A device (100) as claimed in claim 1, wherein the microcontroller (130) analyses the second order derivative signal by seeking a peak value of the second order derivative signal over a threshold to determine operation to the predetermined value.

3. A device (100) as claimed in claim 2, wherein the microcontroller (130) analyses the second order derivative signal by evaluating event duration to determine operation to the predetermined value.

4. A device (100) as claimed in either one of claims 2 or 3, wherein the threshold is based on a multiple of a standard deviation of the detection signal over a noise floor of the second order derivative signal.

5. A device (100) as claimed in claim 1, wherein the microcontroller (130) analyses the second order derivative signal by seeking a specific shape of the second order derivative signal to determine operation to the predetermined value.

6. A device (100) as claimed in claim 5, wherein the microcontroller (130) smoothes the second order derivative signal.

7. A device (100) as claimed in either of claims 5 or 6, wherein the microcontroller (130) defines a length of segment of the second order derivative signal to be analysed.

8. A device (100) as claimed in claim 7, wherein the microcontroller (130) defines bands according to a noise floor of the second order derivative signal and wherein the microcontroller uses dimensionality reduction methods to transform the second order derivative signal to a digital and/or a symbolic representation based on the bands.

9. A device (100) as claimed in any one of claims 5 to 8, wherein the microcontroller (130) eliminates false detections of operation to the predetermined value by either comparing a percentage of the second order derivative signal's waveform to a profile indicative of a genuine tool operation or dividing the number of event detections by two.

10. A device (100) as claimed in any one of the previous claims, wherein the microcontroller (130) filters vibration having a frequency above 20Hz from the detection signal prior to calculation of the second order derivative signal.

11. A device (100) as claimed in any one of the previous claims, wherein the microcontroller (130) separates positive and negative components of the detection signal prior to calculation of the second order derivative signal and wherein the microcontroller (130) combines the positive and negative components of the detection signal after calculation of the second order derivative signal to obtain a new signal.

12. A device (100) as claimed in any one of the previous claims, wherein the sensor (120) is an accelerometer (120).

13. A device (100) as claimed in any one of the previous claims, wherein the sensor (120) and the microcontroller (130) are in wired (142) or wireless (140) communication with each other and/or with an external computer and/or with the internet.

14. A device (100) as claimed in any one of the previous claims, wherein the device (100) comprises an audibile and/or a visible (160) indicator coupled to the microcontroller (130) for indication of operation of the tool (10) to the predetermined value.

15. A method for determining and counting operations of a tool (10) equipped with a mechanism (18, 22, 24, 26) that produces vibration upon operation to a predetermined value, wherein the method comprises the steps of :
providing a sensor (120) for detecting vibration and emitting a detection signal based upon the vibration;
mounting the sensor (120) to a tool (10) in such manner that vibration from a mechanism (14,18,24) of said tool (10) is transmittable to the sensor (120);
providing a microcontroller (130) for receiving a detection signal from the sensor (120); and
executing a programme (136a) on the microcontroller (130) to calculate a filtered second order derivative of the detection signal and to determine and count operation to the predetermined value based on analysis of the second order derivative signal.

## Patentansprüche

1. Vorrichtung (100) zum Bestimmen und Zählen von Betätigungen eines Werkzeugs (10), das mit einem Mechanismus (18, 22, 24, 26) ausgestattet ist, der bei Betätigung auf einen vorbestimmten Wert Vibration erzeugt, wobei die Vorrichtung (100) umfasst:
einen Sensor (120) zum Erfassen von Vibration und Aussenden eines Erfassungssignals basierend auf der Vibration;
eine Montageanordnung (116, 117, 118) zum lösbaren Montieren des Sensors (120) an einem Werkzeug (10) in derartiger Weise, dass eine Vibration von einem Mechanismus (14, 18, 24) des Werkzeugs (10) zum Sensor (120) übertragbar ist;
ein Mikrokontroller (130) zum Empfangen eines Erfassungssignals von dem Sensor (120) und Bestimmen und Zählen von Betätigungen des Werkzeugs (10); und
eine Stromzufuhr (150) zum Zuführen von elektrischem Strom zur Vorrichtung (100),
wobei der Mikrokontroller (130) eine Ableitung zweiter Ordnung eines gefilterten Erfassungssignals berechnet und eine Betätigung auf den vorbestimmten Wert basierend auf einer Analyse des Ableitungssignals zweiter Ordnung bestimmt.

2. Vorrichtung (100) nach Anspruch 1, wobei der Mikrokontroller (130) das Ableitungssignal zweiter Ordnung analysiert, indem er einen Höchstwert des Ableitungssignals zweiter Ordnung über einem Schwellenwert sucht, um eine Betätigung auf den vorbestimmten Wert zu bestimmen.

3. Vorrichtung (100) nach Anspruch 2, wobei der Mikrokontroller (130) das Ableitungssignal zweiter Ordnung durch Auswerten einer Ereignisdauer analysiert, um eine Betätigung auf den vorbestimmten Wert zu bestimmen.

4. Vorrichtung (100) nach einem der Ansprüche 2 oder 3, wobei der Schwellenwert auf einem Vielfachen einer Standardabweichung des Erfassungssignals über einem Grundrauschen des Ableitungssignals zweiter Ordnung basiert.

5. Vorrichtung (100) nach Anspruch 1, wobei der Mikrokontroller (130) das Ableitungssignal zweiter Ordnung analysiert, indem er eine spezielle Form des Ableitungssignals zweiter Ordnung sucht, um eine Betätigung auf den vorbestimmten Wert zu bestimmen.

6. Vorrichtung (100) nach Anspruch 5, wobei der Mikrokontroller (130) das Ableitungssignal zweiter Ordnung glättet.

7. Vorrichtung (100) nach einem der Ansprüche 5 oder 6, wobei der Mikrokontroller (130) eine Länge eines Segments des zu analysierenden Ableitungssignals zweiter Ordnung definiert.

8. Vorrichtung (100) nach Anspruch 7, wobei der Mikrokontroller (130) Banden gemäß einem Grundrauschen des Ableitungssignals zweiter Ordnung definiert und wobei der Mikrokontroller Dimensionalitätsverringerungsverfahren verwendet, um das Ableitungssignal zweiter Ordnung zu einer digitalen und/oder symbolischen Darstellung basierend auf den Banden umformt.

9. Vorrichtung (100) nach einem der Ansprüche 5 bis 8, wobei der Mikrokontroller (130) falsche Erfassungen einer Betätigung auf den vorbestimmten Wert entweder durch Vergleichen eines Prozentsatzes der Wellenform des Ableitungssignals zweiter Ordnung mit einem Profil, das eine tatsächliche Werkzeugbetätigung anzeigt, oder durch Dividieren der Anzahl von Ereigniserfassungen durch zwei eliminiert.

10. Vorrichtung (100) nach einem der vorstehenden Ansprüche, wobei der Mikrokontroller (130) eine Vibration mit einer Frequenz über 20 Hz vor Berechnung des Ableitungssignals zweiter Ordnung aus dem Erfassungssignal filtert.

11. Vorrichtung (100) nach einem der vorstehenden Ansprüche, wobei der Mikrokontroller (130) positive und negative Komponenten des Erfassungssignals vor Berechnung des Ableitungssignals zweiter Ordnung trennt und wobei der Mikrokontroller (130) die positiven und negativen Komponenten des Erfassungssignals nach Berechnung des Ableitungssignals zweiter Ordnung kombiniert, um ein neues Signal zu erhalten.

12. Vorrichtung (100) nach einem der vorstehenden Ansprüche, wobei der Sensor (120) ein Beschleunigungsmesser (120) ist.

13. Vorrichtung (100) nach einem der vorstehenden Ansprüche, wobei der Sensor (120) und der Mikrokontroller (130) in einer verdrahteten (142) oder drahtlosen (140) Kommunikation miteinander und/oder mit einem externen Computer und/oder mit dem Internet stehen.

14. Vorrichtung (100) nach einem der vorstehenden Ansprüche, wobei die Vorrichtung (100) einen hörbaren und/oder einen sichtbaren (160) Indikator umfasst, der zur Anzeige einer Betätigung des Werkzeugs (10) auf den vorbestimmten Wert an den Mikrokontroller (130) gekoppelt ist.

15. Verfahren zum Bestimmen und Zählen von Betätigungen eines Werkzeugs (10), das mit einem Mechanismus (18, 22, 24, 26) ausgestattet ist, der bei Betätigung auf einen vorbestimmten Wert Vibration erzeugt, wobei das Verfahren die Schritte umfasst:
Bereitstellen eines Sensors (120) zum Erfassen von Vibration und Aussenden eines Erfassungssignals basierend auf der Vibration;
Montieren des Sensors (120) an einem Werkzeug (10) in derartiger Weise, dass eine Vibration von einem Mechanismus (14, 18, 24) des Werkzeugs (10) zum Sensor (120) übertragbar ist;
Bereitstellen eines Mikrokontrollers (130) zum Empfangen eines Erfassungssignals von dem Sensor (120); und
Ausführen eines Programms (136a) an dem Mikrokontroller (130) um eine Ableitung zweiter Ordnung eines gefilterten Erfassungssignals zu berechnen und eine Betätigung auf den vorbestimmten Wert basierend auf einer Analyse des Ableitungssignals zweiter Ordnung zu bestimmen und zu zählen.

## Revendications

1. Dispositif (100) pour déterminer et compter des fonctionnements d'un outil (10) équipé d'un mécanisme (18, 22, 24, 26) qui produit une vibration lors du fonctionnement à une valeur prédéterminée, dans lequel le dispositif (100) comprend :
un capteur (120) pour la détection d'une vibration et l'émission d'un signal de détection sur la base de la vibration ;
un agencement de montage (116, 117, 118) pour le montage amovible du capteur (120) sur un outil (10) de telle manière qu'une vibration d'un mécanisme (14, 18, 24) dudit outil (10) peut être transmise au capteur (120) ;
un microcontrôleur (130) pour la réception d'un signal de détection du capteur (120) et la détermination et le comptage de fonctionnements dudit outil (10) ; et
une alimentation électrique (150) pour la fourniture d'énergie électrique au dispositif (100),
dans lequel le microcontrôleur (130) calcule une dérivée de deuxième ordre d'un signal de détection filtré et détermine le fonctionnement à la valeur prédéterminée sur la base d'une analyse du signal de dérivée de deuxième ordre.

2. Dispositif (100) selon la revendication 1, dans lequel le microcontrôleur (130) analyse le signal de dérivée de deuxième ordre par recherche d'une valeur de crête du signal de dérivée de deuxième ordre au-dessus d'un seuil pour déterminer le fonctionnement à la valeur prédéterminée.

3. Dispositif (100) selon la revendication 2, dans lequel le microcontrôleur (130) analyse le signal de dérivée de deuxième ordre par évaluation de la durée d'événement pour déterminer le fonctionnement à la valeur prédéterminée.

4. Dispositif (100) selon l'une ou l'autre des revendications 2 ou 3, dans lequel le seuil est basé sur un multiple d'un écart type du signal de détection au-dessus d'un plancher de bruit du signal de dérivée de deuxième ordre.

5. Dispositif (100) selon la revendication 1, dans lequel le microcontrôleur (130) analyse le signal de dérivée de deuxième ordre par recherche d'une forme spécifique du signal de dérivée de deuxième ordre pour déterminer le fonctionnement à la valeur prédéterminée.

6. Dispositif (100) selon la revendication 5, dans lequel le microcontrôleur (130) lisse le signal de dérivée de deuxième ordre.

7. Dispositif (100) selon l'une ou l'autre des revendications 5 ou 6, dans lequel le microcontrôleur (130) définit une longueur de segment du signal de dérivée de deuxième ordre à analyser.

8. Dispositif (100) selon la revendication 7, dans lequel le microcontrôleur (130) définit des bandes selon un plancher de bruit du signal de dérivée de deuxième ordre et dans lequel le microcontrôleur utilise des méthodes de réduction de dimensionnalité pour transformer le signal de dérivée de deuxième ordre en une représentation numérique et/ou symbolique sur la base des bandes.

9. Dispositif (100) selon l'une quelconque des revendications 5 à 8, dans lequel le microcontrôleur (130) élimine les fausses détections de fonctionnement à la valeur prédéterminée soit par comparaison d'un pourcentage de la forme d'onde du signal de dérivée de deuxième ordre par rapport à un profil indiquant un véritable fonctionnement d'outil soit par division du nombre de détections d'événement par deux.

10. Dispositif (100) selon l'une quelconque des revendications précédentes, dans lequel le microcontrôleur (130) filtre une vibration ayant une fréquence supérieure à 20 Hz du signal de détection avant le calcul du signal de dérivée de deuxième ordre.

11. Dispositif (100) selon l'une quelconque des revendications précédentes, dans lequel le microcontrôleur (130) sépare des composants positifs et négatifs du signal de détection avant le calcul du signal de dérivée de deuxième ordre et dans lequel le microcontrôleur (130) combine les composants positifs et négatifs du signal de détection après le calcul du signal de dérivée de deuxième ordre pour obtenir un nouveau signal.

12. Dispositif (100) selon l'une quelconque des revendications précédentes, dans lequel le capteur (120) est un accéléromètre (120).

13. Dispositif (100) selon l'une quelconque des revendications précédentes, dans lequel le capteur (120) et le microcontrôleur (130) sont en communication filaire (142) ou sans fil (140) l'un avec l'autre et/ou avec un ordinateur externe et/ou avec internet.

14. Dispositif (100) selon l'une quelconque des revendications précédentes, dans lequel le dispositif (100) comprend un indicateur audible et/ou visible (160) couplé au microcontrôleur (130) pour indication du fonctionnement de l'outil (10) à la valeur prédéterminée.

15. Procédé pour déterminer et compter des fonctionnements d'un outil (10) équipé d'un mécanisme (18, 22, 24, 26) qui produit une vibration lors du fonctionnement à une valeur prédéterminée, dans lequel le dispositif comprend les étapes de :
fourniture d'un capteur (120) pour la détection d'une vibration et l'émission d'un signal de détection sur la base de la vibration ;
montage du capteur (120) sur un outil (10) de telle manière qu'une vibration d'un mécanisme (14, 18, 24) dudit outil (10) peut être transmise au capteur (120) ;
fourniture un microcontrôleur (130) pour la réception d'un signal de détection du capteur (120) ; et
exécution d'un programme (136a) sur le microcontrôleur (130) pour calculer une dérivée de deuxième ordre filtrée du signal de détection et déterminer et compter le fonctionnement à la valeur prédéterminée sur la base d'une analyse du signal de dérivée de deuxième ordre.
